# EUROPEAN PATENT APPLICATION

(11) **EP 1 517 549 A2**
(43) Date of publication of application: **23.03.2005**
(21) Application number: 04012508.0
(22) Date of filing: 27.05.2004
(51) Int. Cl.: H04N 5/74, B60R 11/02

(54) **Video displaying system**

(30) Priority: 27.08.2003 JP 2003303686; 27.08.2003 JP 2003303688
(71) Applicant: MATSUSHITA ELECTRIC INDUSTRIAL CO., LTD., Kadoma-shi, Osaka 571-8501 (JP)
(72) Inventor: Hattori, Toshikazu, Yokohama-shi, Kanagawa 226-0025 (JP); Kuwabara, Takashi, Yokohama-shi, Kanagawa 224-0054 (JP); Ibaraki, Susumu, Yokohama-shi, Kanagawa 225-0001 (JP)
(74) Representative: Balsters, Robert

(57) **Abstract**

The video displaying system for enabling a user to view the video more easily by enlarging the display size of the video without narrowing the space of a car in which a front seat 1A and a rear seat 1B are set comprises a projector 100A, which is placed around the lower part of the front seat 1A, for projecting the light for showing the video, a mirror 10A for reflecting the light that is projected from the projector 100 and a screen 20, which is set on the front seat 1A, for displaying the video after receiving the light that is reflected on the mirror 10A.

## Description

### BACKGROUND OF THE INVENTION

### (1) Field of the Invention

The present invention relates to the video displaying system in which, for example, a projector and the like for displaying videos such as movies and television broadcasting, especially the on-vehicle video displaying system.

### (2) Description of the Related Art

With the increase in the popularity of the Rear Seat Entertainment (RSE) for enjoying movies or music by various media such as Digital Versatile Disk (DVD) or Compact Disc (CD) sitting in a rear seat of a car, the on-vehicle video displaying system for the use in the RSE is increasingly becoming popular.

There are two kinds of video displaying systems like this. One of the kinds is a standard direct-view-type for displaying the image source on the display in a way that it can be viewed directly (for example, refer to Japanese Laid-Open Patent application No. 1991-10476 (called the first prior art from here)), and the other one is a projection type for displaying the image source which is a comparatively small displayed object by enlarging and projecting using an optical system processing such as a lens (for example, refer to Japanese publication No. 2001-506772 (called the second prior art from here)).

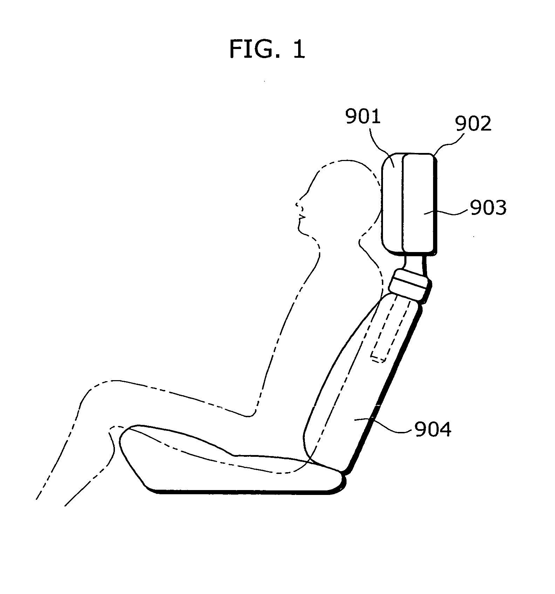

FIG. 1 is an illustration for explaining the video displaying system of the above-mentioned first prior art.

The video displaying system of this first prior art is a direct-view-type and comprises a displaying device 903 for displaying the image source in a way that it can be viewed directly.

After that, this displaying device 903 has a liquid crystal display that is set on the back of the head rest unit 902 of the front seat 904 of a car in a way that the liquid crystal display faces the rear seat. Also, a cushion 901 is set on the front of the head rest unit 902.

The passenger who is seated in the rear seat directly views the video that is displayed on the liquid crystal display of the displaying device 903.

On the other hand, the video displaying system of the second prior art is a projection type and comprises a projector for projecting the light for showing the video.

This projector is embedded in the reclining backrest of the front seat and the light that is projected from the projector is reflected by the reflection mirror and shown on the screen as video image.

Here, the structure of the conventional projector will be explained (for example, refer to pp. 295-340 of No. 3, 0 plus E Vol. 22 (March of 2000).

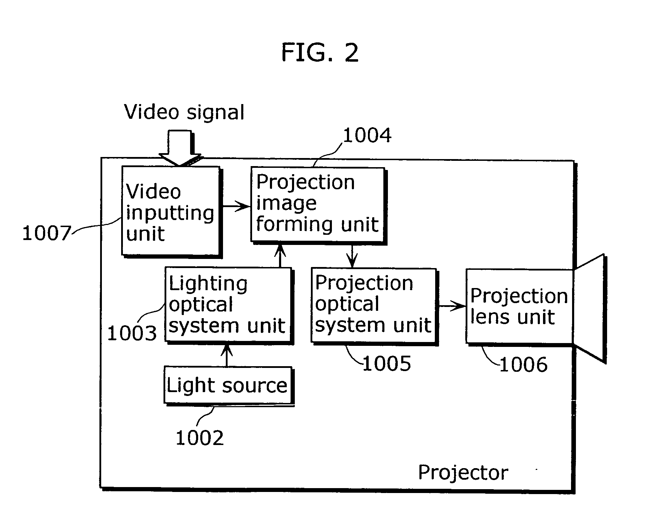

FIG. 2 is a block diagram showing the structure of the conventional projector.

This projector comprises a light source 1002, a lighting optical system unit 1003, a projection image forming unit 1004, a projection optical system unit 1005, a video inputting unit 1007, and a projection lens unit 1006.

The video inputting unit 1007 obtains the video signal showing the video of a movie or television broadcasting from the device such as a DVD player or a TV tuner and outputs the video signal to the projection image forming unit 1004.

The lighting optical system unit 1003 transforms the light that is outputted from the light source 1002 into the light that is suitable for creating the light for showing the video and outputs it to the projection image forming unit 1004.

The projection image forming unit 1004 comprises a transparent type liquid crystal panel, displays the image according to the video signal that is outputted from the video inputting unit 1007 on the transparent type liquid crystal panel and generates the light for showing the video by transmitting the light that is outputted from the lighting optical system unit 1003 on the transparent liquid crystal panel on which the image is displayed. After that, the projection image forming unit 1004 outputs the light that is generated in this way to the projection optical system unit 1005.

The projection optical system unit 1005 optically processes the light that is outputted from the projection image forming unit 1004 and outputs it on the projection lens unit 1006.

The projection lens unit 1006 is structured by combining a plurality of lenses, adjusts the focus on the screen and optically changes the display size of the video that is shown on the screen.

However, the video displaying system of the first prior art has a problem that it is difficult to view the video because the display size of the video is small because it must not be bigger than the size of the head rest unit 902. Also, forcibly making the display size bigger than the size of the head rest unit 902, safety in a collision is lost because the weight of the displaying device 903 increases.

Further, there is a need to secure the space for embedding a projector in the reclining backrest of the front seat by thickening the reclining backrest in the video displaying system of the second prior art, which brings a problem that the space in a car is made smaller as the result. Also, maintenance such as the exchange of the light source lamp of the projector is troublesome.

### SUMMARY OF THE INVENTION

Therefore, the present invention is conceived considering the problems and an object of the present invention is to provide a video displaying system that enables a user to view the video by enlarging the display size of the video without narrowing the room space.

In order to achieve the above-mentioned object, the video displaying system for displaying video in space where a first seat and a second seat are set concerning the present invention, comprises: a projection unit, which is placed around the lower part of the first seat, operable to project light for showing the video; and a screen, which is set on the first seat or the second seat, for displaying the video by receiving the light that is projected by the projection unit.

For example, the video displaying system further comprises a reflection unit operable to reflect the light that is projected from the reflection unit, wherein the screen displays the video by receiving the light that is reflected by the reflection unit. Also, the video displaying system like this is set in space of a car which includes the first seat as the front seat and the second seat as the rear seat.

In this way, as light is projected on the screen from the projection unit via the reflection unit and the video is displayed on the screen, the display size of the video can be enlarged so as to be easily viewed. Further, as the screen is comparably light even if the size is made bigger, it is possible to enlarge the display size of the video without damaging the safety. Also, setting the projection unit around the lower part of the first seat makes it possible to prevent the car space, that is, the space where the first seat and the second seat are set, from being narrowed and use the car space effectively.

Also, the video displaying system may further comprise a movement unit operable to move the projection unit by user's operation in a way that a light path length between the projection unit and the screen is changed.

In this way, the optical path length between the projection unit and a screen changes because the projection unit moves according to the user operation of the movement unit, the user can arbitrary set the size of the video that is shown on the screen.

Also, the video displaying system wherein the first seat or the second seat on which the screen is set may be movable, and the video displaying system may further comprise: a seat position detecting unit operable to detect a position of the first seat or the second seat; and a light path length fixing unit operable to move the projection unit in a way that a light path length between the projection unit and the screen is maintained based on a detection result obtained by the seat position detecting unit.

Also, the video displaying system wherein the first seat or the second seat on which the screen is set may be movable, and the video displaying system may further comprise a holding unit, which is set on the first seat or the second seat, operable to hold the projection unit.

In this way, the optical path length between the projection unit and a screen is maintained even in the case where the optical path length between the first seat and the second seat on which a screen is set are moved, it is possible to maintain the size of the video that is shown on the screen.

Further, the video displaying system wherein the projection unit may be placed below the first seat whose part facing the projection unit is openable and closable.

In this way, opening a part of the first seat makes it possible to peep into the projection unit from the aperture, which makes it possible to perform maintenance of the projection unit easily via the aperture.

Also, the video displaying system may be further set on the first or the second seats and may comprise a keeping unit for keeping the screen freely rotatable.

In this way, the user can make the screen face himself or herself and enables the user to view the video easily that is shown on the screen.

Also, the video displaying system may further comprise the transfer unit for transferring the screen according to the reclining backrest of the first and the second seats.

In this way, the user can adjust the position of the screen at the height of his or her own viewing point because the screen moves according to the reclining backrest, and the user can make easier to view the video that is shown on the screen.

Here, the video displaying system wherein the holding unit and the movement unit are structured in a way that movement along the backrest of the screen causes the swing. For example, the video displaying system wherein the holding unit and the movement unit are structured as follows: at the time when the screen moves upward along the backrest, in response to the movement, the screen swings in a way that an angle between the screen and the backrest increases; and at the time when the screen moves downward along the backrest, in response to the movement, the screen swings in a way that an angle between the screen and the backrest decreases.

In this way, as the angle between the screen and the reclining backrest increases according to the transfer to above the screen while the angle decreases according to the transfer to below the screen, it is possible to adjust the screen at user's viewing point in a wide range and makes it easier to view the video that is shown on the screen.

Also, the video displaying system may further comprise: a screen status detecting unit operable to detect at least one of an angle between the screen and the backrest of the first seat or the second seat and a position of the screen, the angle changing according to the rotation of the screen and the position changing according to a movement of the screen; and a video position movement control unit operable to change at least one of a reflection direction of the light by the reflection unit and a position of the reflection unit in a way that a position of the video that is shown on the screen is maintained according to the detection result obtained by the screen status detecting unit.

In this way, as the video position fluctuation controlling unit changes the orientation or the position of the projection unit according to the operation so as to maintain the position of the video that is shown on the screen in the case where the screen is moved or swung, it is possible to easily prevent the position of the video that is shown on the screen from fluctuating without making the user bother to change the orientation or the position of the projection unit.

Also, the video displaying system may further comprise a reclining angle detecting unit operable to detect the reclining angle of the first seat or the second seat on which the screen is set, wherein the video position movement control unit changes at least one of the reflection direction of the light by the reflection unit and the position of the reflection unit in a way that the position of the video that is shown on the screen is maintained according to the detection result of the screen status detecting unit and the reclining angle detecting unit.

In this way, as the video position fluctuation controlling unit changes the orientation or the position of the reflection unit according to the reclining angle in the case where the first seat or the second seat to which a screen is installed is reclined, it is possible to easily prevent the position of the video that is shown on the screen from fluctuating without making the user bother to change the orientation or the position of the reflection unit.

Here, the video displaying system wherein the projection unit may specify the light path length of the light between the projection unit and the screen based on the detection result of the screen status detecting unit and the reclining angle detecting unit and adjust the focus of the light to be projected according to the light path length.

In this way, as the projection unit adjusts the focus distance according to the state or the reclining angle of the screen in the case where the screen is moved or swung or the first seat or the second seat to which a screen is installed is reclined, it is possible to easily display a vivid video without making the user bother to adjust the focus distance of the projection unit.

Also, the video displaying system wherein the projection unit may perform the correction processing on the light to be projected so as not to cause any distortions in the video that is shown on the screen based on the detection result of the screen status detecting unit and the reclining angle detecting unit.

In this way, as there emerges no distortion in the video that is shown on the screen even in the case where the screen is moved or swung or the first seat or the second seat to which a screen is installed is reclined, it is possible to display a vivid video.

Also, the video displaying system may further comprise: a reflection relay unit operable to further reflect the light that is reflected by the reflection unit toward the screen according to a change of at least one of a reflection direction of the light projected by the reflection unit and a position of the reflection unit; and a switching unit operable to change any of an orientation or a position of the refiection unit based on the detection result obtained by the screen status detecting unit and the reclining angle detection unit and switch the following light paths: a first light path from the reflection unit to the screen via the reflection relay unit; and a second light path from the reflection unit to the screen without passing via the reflection relay unit. For example, the video displaying system wherein the switching unit compares the first correction amount necessary for the correction processing in the first light path with the second correction amount necessary for the correction processing in the second light path based on the detection result of the screen status detecting unit and the reclining angle detecting unit, and changes any of the direction or the position of the reflection unit so that the first light path is switched to the second light path at the time when the second correction amount is smaller than the first correction amount. Or, the video displaying system wherein the switching unit calculates the correction amount necessary for the correction processing in the first light path based on the detection result of the screen status detecting unit and the reclining angle detecting unit and changes any of the direction or the position of the reflection unit so that the first light path is switched to the second light path at the time when the correction amount is bigger than the prescribed threshold value.

In this way, as the reflection relaying unit selects whether reflection should be used or not so that the correction amount increases, it is possible to make the video that is shown on the screen vivid by avoiding any forced correction processing.

Here, the video displaying system wherein the holding unit holds the screen in a way that the screen may be laid against the backrest of the first seat or the second seat on which the screen is set when the light is not projected from the projection unit.

In this way, as the screen is stored flat at the time when this system is not used, it is possible to effectively use space by making thinner the prominence by the screen.

Also, the video displaying system may further comprise a shielding unit operable to shield light path of the light in a way that the shielding unit covers the light path so as not to allow incoming light to affect the light.

This makes it possible to reduce the influence of outside light and make the video that is shown on the screen vivid.

Also, the video displaying system may further comprise an enclosure which includes the projection unit and the reflection unit.

In this way, it is possible to protect the projection unit and the reflection unit.

Here, the video displaying system may further comprises a stopping unit for stopping the projection of the light from the projection unit in the case where the reclining angle is judged to be the predetermined threshold value or more by comparing the reclining angle that is detected by the reclining angle detecting unit to the predetermined threshold value.

In this way, it is possible to realize energy conservation by stopping the projection of unnecessary light in the case where the reclining angle that disables showing the video on the screen is set at the predetermined threshold value because the projection of the light from the projection unit is stopped.

Note that it is possible to realize the present invention as a video displaying method for displaying the video.

### FURTHER INFORMATION ABOUT TECHNICAL BACKGROUND TO THIS APPLICATION

Japanese Patent application No. 2003-303686 filed on August 27th, 2003, is incorporated herein by reference.

Japanese Patent application No. 2003-303688 filed on August 27th, 2003, is incorporated herein by reference.

### BRIEF DESCRIPTION OF THE DRAWINGS

These and other subjects, advantages and features of the invention will become apparent from the following description thereof taken in conjunction with the accompanying drawings that illustrate a specific embodiment of the invention. In the Drawings:
FIG. 1 is an illustration explaining the conventional video displaying system.
FIG. 2 is a block diagram showing the structure of the conventional projector.
FIG. 3 is a block diagram showing the positional structure of the video displaying system in the first embodiment of the present invention.
FIG. 4 is a positional diagram showing the positional state of the above-mentioned projector, reflection mirror and screen.
FIG. 5 is a block diagram showing the structure of the above-mentioned projector.
FIG. 6 is an external view of the above-mentioned mobile device.
FIG. 7 is a side view of the above-mentioned mobile device that is placed on the rail.
FIG. 8 is a structural diagram showing inside the enclosure of the above-mentioned mobile device.
FIG. 9 is a flow chart showing the operation at the time when the above-mentioned motor control unit changes the display size of the video.
FIG. 10 is an illustration explaining the maintenance of the above-mentioned projector.
FIG. 11 is a structural diagram showing the structural position of the video displaying system concerning one of the above-mentioned variations.
FIG. 12 is a structural diagram showing the positional structure of the video displaying system concerning another one of the above-mentioned variations.
FIG. 13 is a structural diagram showing another positional structure of the video displaying system concerning another one of the above-mentioned variations.
FIG. 14 is a perspective view showing the positional status of the projector and the mobile device concerning another one of the above-mentioned variations.
FIG. 15 is a structural diagram showing the positional structure of the video displaying system in the second embodiment of the present invention.
FIG. 16 is a sectional view of the reclining backrest of the above-mentioned front seat.
FIG. 17 is a circuit structural diagram showing the circuit structure of the above-mentioned screen angle detector.
FIG. 18 is a block diagram showing the structure of the projector for performing the correction processing on the above-mentioned light for showing the video and the control on the mirror driving unit.
FIG. 19 is an illustration explaining how the orientation of the first mirror changes by the rotation of the above-mentioned screen.
FIG. 20 is an illustration explaining how the orientation of the first mirror changes by the reclining of the above-mentioned front seat.
FIG. 21 is an illustration explaining the above-mentioned trapezoid correction.
FIG. 22 is another illustration explaining the above-mentioned trapezoid correction.
FIG. 23 is a flow chart showing the operation of the above-mentioned projector.
FIG. 24 is a structural diagram showing the positional structure of the video displaying system in the case where the above-mentioned projector is set below the rear seat.
FIG. 25 is a block diagram showing the positional structure of the video displaying system in the third embodiment of the present invention.
FIG. 26 is a side view of the above-mentioned guide rail, screen and screen holder.
FIG. 27 is a block diagram showing the structure of the projector for performing the correction processing on the above-mentioned light for showing the video and controlling the mirror driving unit.
FIG. 28 is an illustration explaining how the orientation of the first mirror changes depending on up and down movement of the above-mentioned screen.
FIG. 29 is a flow chart showing the operation of the above-mentioned projector.
FIG. 30 is a block diagram showing the positional structure of the video displaying system in the fourth embodiment of the present invention.
FIG. 31 is an outline side view of the above-mentioned guide rail, screen and screen holder.
FIG. 32 is a perspective view of the above-mentioned screen holder.
FIG. 33 is a detailed side view of the above-mentioned guide rail and screen holder.
FIG. 34 is another detailed side view of the above-mentioned guide rail and screen holder.
FIG. 35 is a block diagram showing the structure of the projector for performing the correction processing on the above-mentioned light for showing the video and controlling the mirror driving unit.
FIG. 36 is an illustration explaining how the orientation of the first mirror changes depending on up and down movement or rotation of the above-mentioned screen.
FIG. 37 is an illustration explaining how the processing unit of the above-mentioned projector changes the angle of the first mirror depending on the correction amount.
FIG. 38 is a flow chart showing the operation of the above-mentioned projector.

### DESCRIPTION OF THE PREFERRED EMBODIMENT(S)

The video displaying system in this embodiment of the present invention will be explained with reference to figures below.

### (First Embodiment)

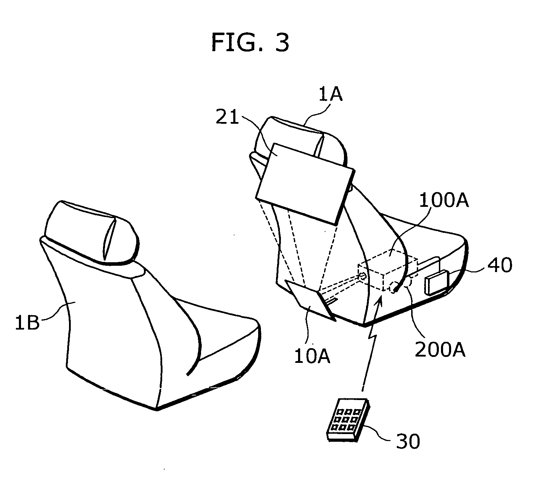

FIG. 3 is a block diagram showing the positional structure of the video displaying system in the first embodiment of the present invention.

This video displaying system is for enabling a user to view the video easily by enlarging the display size of the video without narrowing the car space and comprises a projector 100A for projecting the light for showing the video, a moving device 200A for moving the projector 100A in the back and forth direction, a remote controller 30 for operating the moving device 200A from a remote place, a seat position detector 40 for detecting the position of the seat 1A, a mirror 10A for reflecting the light that is projected from the projector 100A, a screen 21 for displaying the video after receiving the light that is reflected by the mirror 10A.

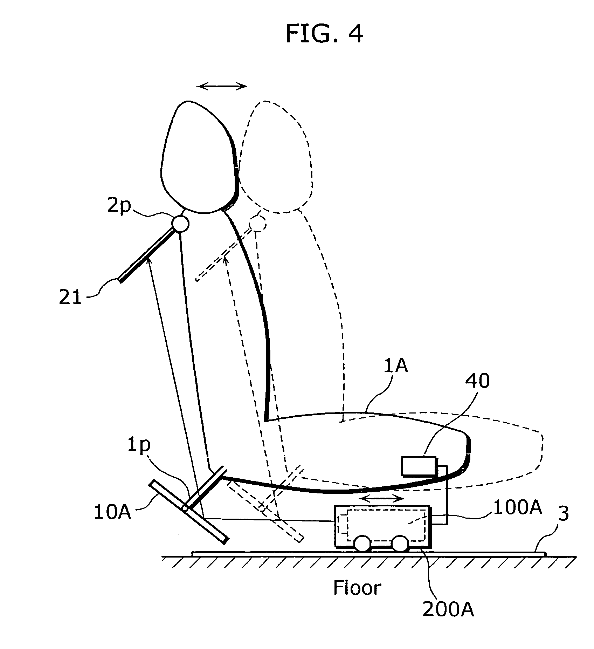

FIG. 4 is a positional diagram showing the positional status of the projector 100A, a mirror 10A and a screen 21.

As shown in this FIG. 4, the mirror 10A is set at the bottom part of the backrest of the front seat 1A via a post 1p and the screen 21 is set at the upper part of the backrest of the front seat 1A via a fastening device 2p.

Also, the moving device 200A runs in the back and forth direction according to the rail 3 set on the floor that is placed in the lower part of the front seat 1A, the projector 100A is set on the moving device 200A in a state that the projection exit from which the light for showing the video is projected is placed to the back part below the front seat 1A.

In other words, the mirror 10A and the screen 21 transfer with the back and forth movement of the front seat 1A, and the projector 100A transfers independently from the front seat 1A.

After that, the light that is projected from the projector 100A is reflected by the mirror 10A first and is projected on the back surface of the screen 21.

Here, the screen 21 is called rear projection screen, and the light that is irradiated from back is displayed on the front surface as video. This enables a passenger (user) who is seated in the rear seat 1B to view the video that is displayed on the screen 21.

The seat position detector 40 detects the position of the front seat 1A in the front and back direction and outputs the detection result to the moving device 200A as the seat position signal.

The remote controller 30 outputs, to the moving device 200A, the size instruction signal of the descriptions that specifies the display size of the video that is shown on the screen 21 according to user's operation via the communication medium by, for example, infrared rays.

The projector 100A obtains the video signal showing the video of a movie or television broadcasting from a device such as a DVD player or a TV tuner that is mounted in a car, and projects the light for showing the video.

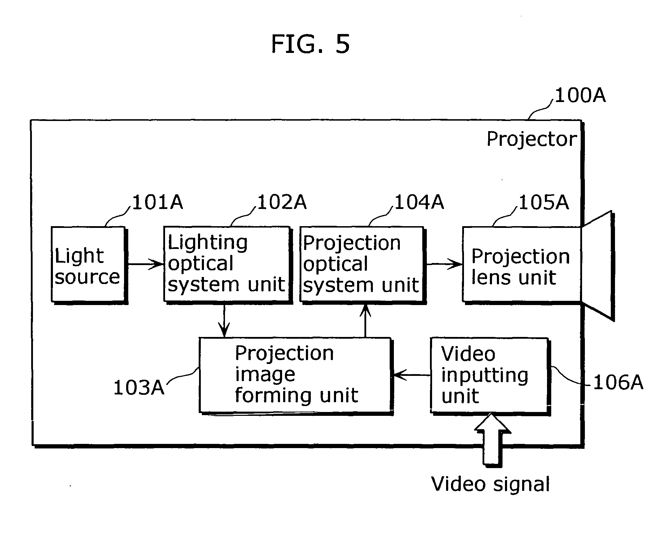

FIG. 5 is a block diagram showing the structure of the projector 100A.

This projector 100A comprises a light source 101A, a lighting optical system unit 102A, a projection image forming unit 103A, a projection optical system unit 104A, a video inputting unit 106A and a projection lens unit 105A.

The video inputting unit 106A outputs the video signal to the projection image forming unit 103A by obtaining the above-mentioned video signal.

The lighting optical system unit 102A transforms the light that is outputted from the light source 101A into the light that is suitable for creating the light for showing the video and outputs it to the projection image forming unit 103A.

The projection image forming unit 103A comprises a transparent liquid crystal panel, displays the image that corresponds to the video signal that is outputted from the video inputting unit 106A on the transparent liquid crystal panel and generates the light for showing the video by transmitting the light that is outputted from the lighting optical system unit 102A on the transparent liquid crystal panel on which the image is displayed. After that, the projection image forming unit 103A outputs the light that is generated in this way to the projection optical system unit 104A.

The projection optical system unit 104A optically processes the light that is outputted from the projection image forming unit 103A to the projection lens unit 105A.

The projection lens unit 105A is structured by combining a plurality of lenses, adjusts the focus distance and optically changes the display size of the video that is shown on the screen.

The moving device 200A moves the projector 100A in the back and forth direction, changes the distance between the projector 100A and the screen 21, and changes the display size of the video that is shown on the screen 21. For example, the moving device 200A shortens the distance between the projector 100A and the screen 21 so as to minimize the display size of the video by moving the projector 100A in the front direction or it lengthens the distance between the projector 100A and the screen 21 so as to maximize the display size of the video by moving the projector 100A in the back direction.

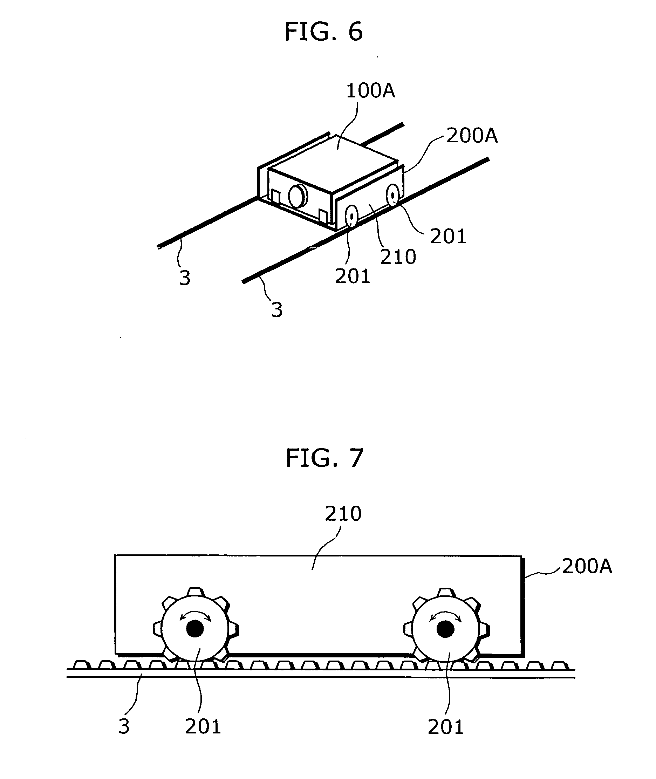

FIG. 6 is an external view showing the appearance of the moving device 200A.

The moving device 200A comprises an enclosure 210 whose structure is an approximate U-shape, wheels 201 that are set on both of the side parts of the enclosure 210 two by two. After that, the projector 100A is set in the concave part of this enclosure 210.

The wheel 201 is positioned on the rail 3 and swings by the motor drive that is set inside the enclosure 210.

FIG. 7 is a side view of the moving device 200A that is positioned on the rail 3.

As shown in this FIG. 7, the wheel 201 comprise a plurality of convex parts that are prominent outside along the circumference and swing in a way that they match the concave parts that are structured on the rail 3.

In this way, the moving device 200A can move without slipping on the rail 3.

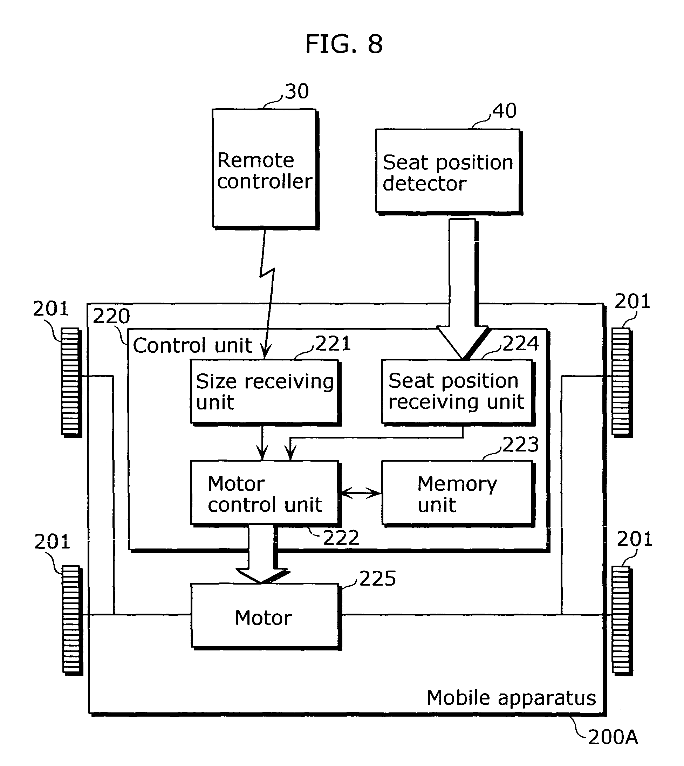

FIG. 8 is a block diagram showing the structure of inside the enclosure 210 of the moving device 200A.

In this way, the above-mentioned motor 225 and the control unit 220 that controls the motor 225 are included inside the enclosure 210 of the moving device 200A.

The control unit 220 comprises a size receiving unit 221, a seat position receiving unit 224, a motor control unit 222 and a memory unit 223.

The size receiving unit 221 receives the size instruction signal that is sent from the remote controller 30 and outputs the size instruction signal to the motor control unit 222.

The seat position receiving unit 224 obtains the seat position signal from the seat position detector 40 and outputs this to the motor control unit 222.

The memory unit 223 has the area for memorizing the position of the projector 100A.

The motor control unit 222 always obtains the seat position signal from the seat position receiving unit 224 while the projection of the light by the projector 100A is performed, judges whether the position of the front seat 1A that is shown by the seat position signal changed or not. After that, the motor control unit 222 reads out the position of the projector 100A that is previously stored in the memory unit 223 in the case where the position of the front seat 1A is judged as changed and transfers the projector 100A by driving the motor 225 so as to swing the wheel 201 so that the distance between the screen 21 and the projector 100A before the change in the position of the front seat 1A becomes equal to the distance between the screen 21 and the projector 100A after the change in the position of the front seat 1A. After moving the projector 100A, the motor control unit 222 updates the position of the projector 100A that is stored in the memory unit 223 to the position after the movement.

In this way, as the projector 100A moves according to the movement even in the case where the front seat 1A moves in the back and forth direction by the passenger to be seated, the display size of the video that is shown on the screen 21 is maintained at a certain size.

Also, on obtaining the size instruction signal from the size receiving unit 221, the motor control unit 222 specifies the display size of the video that is shown by the size instruction signal and reads out the position of the projector 100A that is previously stored in the memory unit 223. After that, the motor control unit 222 calculates the moving direction and the distance of the projector 100A that is necessary for making them specified display sizes based on the position of the read-out projector 100A. Next, the motor control unit 222 swings the wheel 201 by driving the motor 225 in a way that the projector 100A moves in the calculated moving direction and distance. After the projector 100A moves, the motor control unit 222 updates the position of the projector 100A that is stored in the memory unit 223 to the position after the movement.

In this way, the display size of the video that is shown on the screen 21 can be easily adjusted based on the operation by the remote controller 30. The optimum size of the video display varies depending on user's taste or the descriptions of the video, it is possible to easily set the display size at an optimum size in this embodiment. Also, the projector 100A and the moving device 200A are set below the front seat 1A, it is possible to move the projector 100A within the comparatively long distance and broaden the setting range of the image size.

The position of the projector 100A that is previously determined is stored as the initial setting position in the memory unit 223 at the starting time of this system, the projector 100A and the moving device 200A are set at the positions. Therefore, the present position of the projector 100A is stored in the memory unit 223.

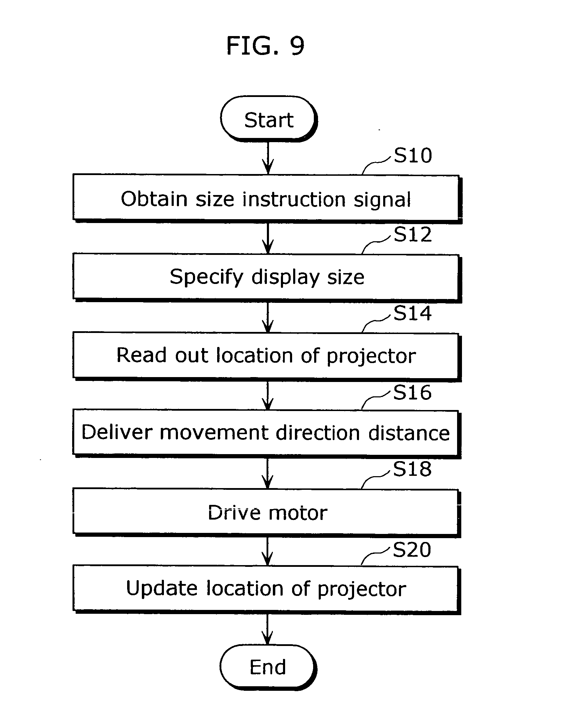

FIG. 9 is a flow chart showing the operation at the time when the motor control unit 222 changes the display size of a video.

First, the motor control unit 222 obtains the size instruction signal via the size receiving unit 221 from the remote controller 30 (step S10) and specifies the display size of the video that is shown by the size instruction signal (step S12).

Next, the motor control unit 222 reads out the position of the projector 100A that is stored in the memory unit 223, that is, the present position of the projector 100A (step S14).

After that, the motor control unit 222 calculates the moving direction and the distance of the projector 100A necessary for making the display size of a video that is shown in the screen 21 at the display size that is specified in the step S12 based on the position of the projector 100A that is read out in the step S14 (step S16). Also, the motor control unit 222 here may calculate the rotation direction and the number of rotation of the wheel 201 of the moving device 200A instead of the above-mentioned moving direction and distance.

After that, the motor control unit 222 drives the motor 225 in a way that the projector 100A moves to the moving direction and the moving distance that are calculated in the step S16 or the wheel 201 of the moving device 200A swings at obtained times in the rotation direction that is calculated in the step S16 (step S18).

After that, the motor control unit 222 updates the position of the projector 100A that is stored in the memory unit 223 to the position after the movement (step S20).

Here, the focus distance from the projector 100A to the screen 21 changes by the movement of the front seat 1A or the projector 100A, but this focus distance is optically adjusted in the projection lens unit 105A of the projector 100A. This adjustment method is the same as the method that is performed in the projector that is on sale now.

In this way, in this embodiment, it enables a user to view the video easily by placing the projector 100A below the front seat 1A, using the reflection by the mirror 10A, making the light from the projector 100A focus on the screen 21 that is set at the front seat 1A, displaying the video on the screen 21, and displaying the video bigger without narrowing the car space. Therefore, the user who is to be seated in the rear seat 1B can enjoy the video that is shown on a big display screen in a room.

Also, it is possible to improve the safety without setting a heavy displaying device at a comparatively higher part like a direct-view-type video displaying system.

Also, in the embodiment, using a flexible material such as a mixture of soft vinyl chloride and a dispersing agent makes it possible to further improve the safety preventing any heavy injury from occurring even in the case where a passenger smashes against the screen in his or her head at the time of an accident such as a collision.

Here, the maintenance of the projector 100A in this embodiment will be explained.

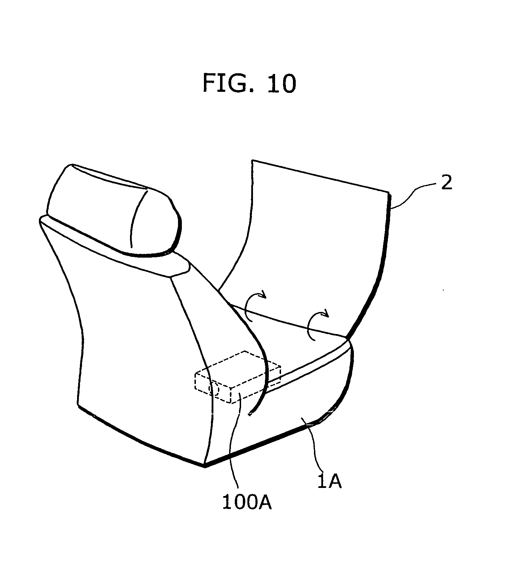

FIG. 10 is an illustration explaining the maintenance of the projector 100A.

The seat 2 of the front seat 1A swings making a side an axis and is structured in a way that it freely opens or closes.

In other words, the user can peep the projector 100A that is set on the floor from the aperture by opening the seat 2 and perform maintenance of, for example, the exchange of light lamps of the projector 100A keeping the seat 2 opened. Also, it is possible to easily take out the projector 100A to outside the car with the seat 2 opened.

In this way, the projector 100A is placed below the front seat 1A in the embodiment, but making the seat 2 of the front seat 1A openable or closable makes it possible to easily perform maintenance of the projector 100A without using a special removing technique or tool.

### (Variation)

Next, variation of the video displaying system in the above-mentioned embodiment will be explained.

First, variation concerning the position where the projector 100A and the moving device 200A are set will be explained.

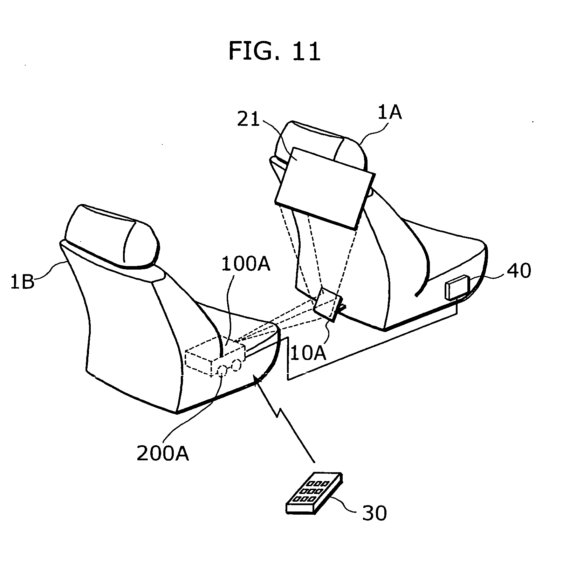

FIG. 11 is a block diagram showing the positional structure of the video displaying system concerning this variation.

The projector 100A and the moving device 200A are placed below the back seat 1B making the projection exit face the front seat. After that, the light that is projected from the projector 100A to the front direction is reflected on the mirror 10A and irradiated on the back surface of the screen 21.

In this way, it enables a passenger to be seated in the rear seat 1B to view the video easily by enlarging the display size of the video without narrowing the car space like in the above-mentioned embodiment even in the case where the projector 100A and the moving device 200A are positioned below the rear seat 1B.

Next, the variation concerning the number of mirrors will be explained.

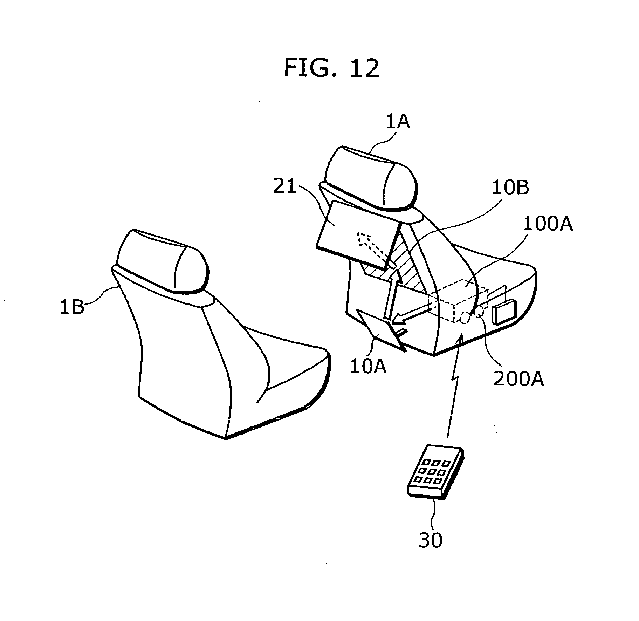

FIG. 12 is a block diagram showing the positional structure of the video displaying system concerning the variation.

The video displaying system concerning the variation further comprises a mirror 10B in addition to the component that is included in the video displaying system shown in FIG. 3.

This mirror 10B is set on the back of the front seat 1A, the light that is reflected by the mirror 10A is further reflected and irradiated on the back of the screen 21.

In other words, in the video displaying system concerning the variation, two mirrors are prepared and the light that is irradiated from the projector 100A is reflected on the two mirrors so as to make it focus on the screen 21.

In this way, as preparing two mirrors makes it easier to set a light path of the light for showing the video, it is possible to improve the degree of flexibility in positional designing of the video displaying system.

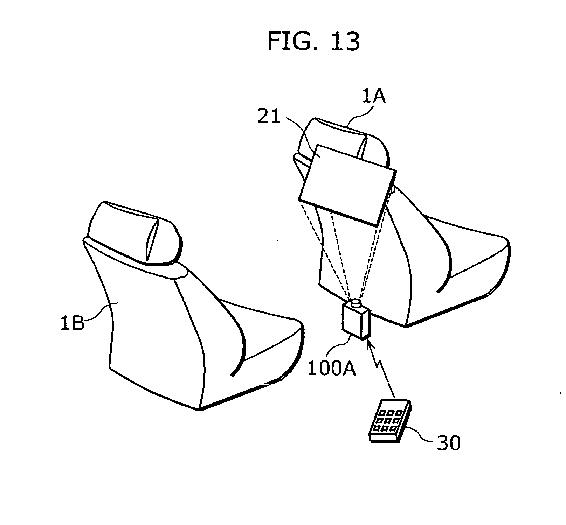

FIG. 13 is a block diagram showing another positional structure of the video displaying system concerning the variation.

The video displaying system concerning the variation does not have any mirror 10A and the screen 21 displays the video by directly receiving the light from the projector 100A.

In this way, omitting the mirror makes it possible to simplify the structure of the video displaying system and promote cost reduction.

Next, variation concerning the setting method of the projector 100A and the moving device 200A will be explained.

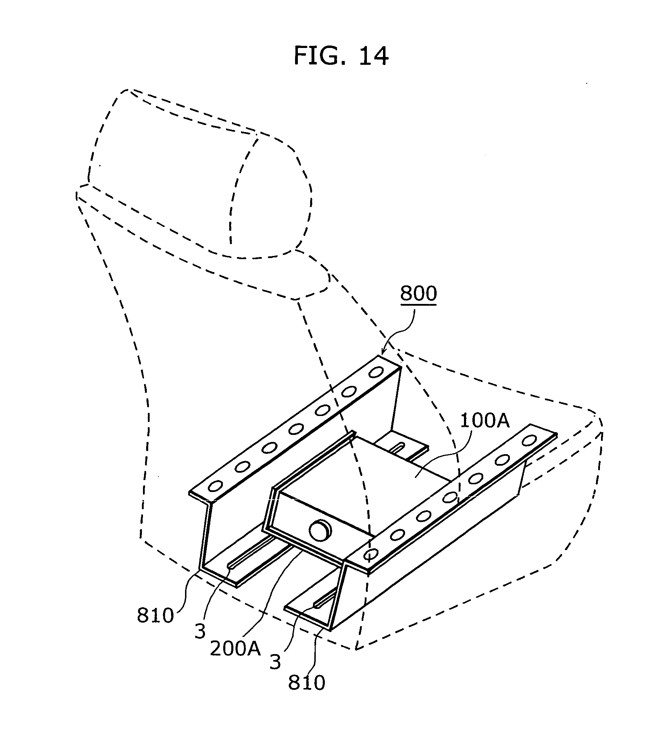

FIG. 14 is a perspective view showing the positional status of the projector 100A and the moving device 200A concerning the variation.

The projector 100A and the moving device 200A concerning the variations are stored on the back surface of the front seat 1A using a holding material 800.

The holding material 800 comprises two board pieces 810. The board pieces 810 is structured in a way that both of the long sides of the metal board of an approximate rectangle are bend vertically to the opposite direction, rail 3 is attached to one of the sides and a hole for screw is structured on the other side.

Two board pieces 810 of the holding material 800 like this are screwed to the back surface of the front seat 1A through the above-mentioned hole. As the result, two board pieces 810 are attached on the seat 1A in a way that the projector 100A and the moving device 200A are held.

After that, the moving device 200A on which the projector 100A is placed moves along the rail 3 that is attached to the holding material 800.

In the variation, as the projector 100A and the moving device 200A are maintained on the front seat 1A even in the case where the front seat 1A is moved in the back and forth direction, the projector 100A moves like the front seat 1A together with the front seat 1A, the relative position of the projector 100A, the mirror 10A and the screen 21 does not change and the display size of the video that is shown on the screen 21 can be maintained. As the result, in the variation, the control unit 220 of the moving device 200A does not need to perform control according to the movement of the front seat 1A and it is possible to simplify the structure of the control unit 220.

### (Second Embodiment)

The video displaying system in the second embodiment of the present invention will be explained with reference to figures.

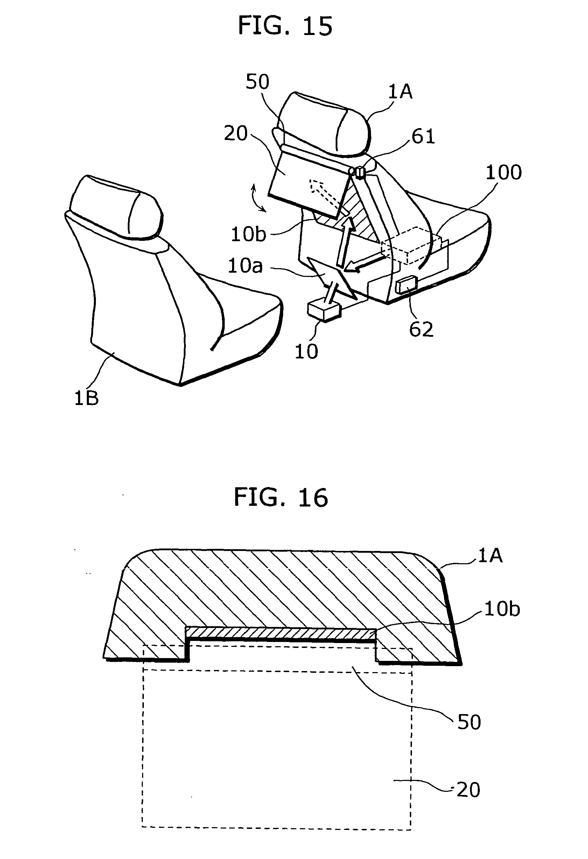

FIG. 15 is a structural diagram showing the positional structure in the video displaying system in the second embodiment of the present invention.

This video displaying system is for enables a passenger to view the video easily by enlarging the display size of the video without narrowing the space in a car and making the display position of the video variable, and comprises a projector 100 for projecting the light for showing the video, the first mirror 10a for reflecting the light , the second mirror 10b for further reflecting the light that is reflected on the first mirror 10a, a mirror driving unit 10 for changing the orientation of the first mirror 10a, a screen 20 for displaying the video after receiving the light that is reflected on the second mirror 10b, a screen holder 50 for holding the screen 20, a screen angle detector 61 for detecting the angle (screen angle) to the front seat 1A (the second mirror 10b) of the screen 20 and reclining angle detector 62 for detecting the reclining angle of the front seat 1A.

The projector 100 is fixed below the front seat 1A in a way that the projection exit into which the light is projected is made to face the rear seat. After that, this projector 100 obtains video signals showing the video of a movie or television broadcasting from a device such as a DVD player or a TV tuner that is mounted on the car and projects the light for showing the video.

FIG. 16 is a sectional view of the reclining backrest of the front seat 1A.

A rectangular concave is structured in the back surface of the reclining backrest of the front seat 1A, and the second mirror 10b is attached on the bottom of the concave.

The screen 20 is called rear projection screen, the light that is irradiated from the back by the reflection by the second mirror 10b is displayed on the front as video. In this way, the passenger (user) who is to be seated in the rear seat 1B can view the video that is shown on the screen 20.

The overall structure of the screen holder 50 is an approximate cylinder, and it is attached on the upper back part of the front seat 1A in a way that the axis is made to be parallel to the width of the front seat 1A. After that, the screen holder 50 holds the sides of the screen 20 and is structured in a way that the screen 20 is made to be rotatable making the sides an axis.

In this way, in the embodiment, the projector 100 is placed below the front seat 1A, the light from the projector 100 is focused on the screen 20 that is attached to the front seat 1A by using the reflection by the first mirror 10a and the second mirror 10b, the video is displayed big without narrowing the car space by displaying the video on the screen 20 so as to enable the user to view the video easily. Also, in the embodiment, as the screen 20 is attached to the front seat 1A using the screen holder 50, the user who is seated in the rear seat 1B manually swing the screen 20 to his or her view point so as to view the video that is shown on the screen 20 more easily.

Further, in the embodiment, in order not to allow rotating the screen 20 and reclining the front seat 1A to change the position of the video that is shown on the screen 20 (relative position to the screen 20 of the video) or contort the video, the projector 100 performs correction processing on the light to be projected and controls the mirror driving unit 10 so as to change the orientation of the first mirror 10a.

In other words, in the embodiment, the screen angle detector 61 and the reclining angle detector 62 are equipped so that the projector 100 can perform the above-mentioned correction processing and control.

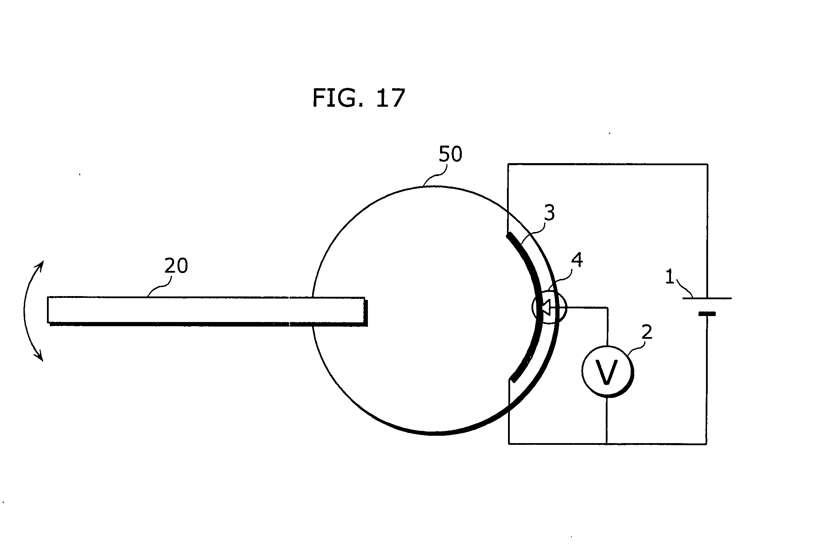

FIG. 17 is a circuit block diagram showing the circuit structure of the screen angle detector 61.

The screen angle detector 61 comprises a resistance wire 3, a power 1 for applying a predetermined direct current to both ends of the resistance wire 3, a contact 4 for moving the contact part according to the rotation of the screen 20 by contacting one of the ends to the resistance wire 3 and an voltage detector 2 for detecting the electric potential difference between the other end of the contact 4 and one of the ends of the resistance wire 3. Here, the screen holder 50 swings according to the rotation of the screen 20 and the contact part to the resistance wire 3 by the contact 4 moves. In this way, the voltage detector 2 detects the voltage according to the rotation of the screen 20.

In other words, the screen angle detector 61 outputs the signal of the voltage that is detected by the voltage detecting unit 2 as the screen angle signal showing the screen angle.

The reclining angle detector 62 has the same circuit structure as the circuit structure of the screen angle detector 61 and outputs the voltage signal that changes according to the reclining angle of the front seat 1A as the reclining angle signal.

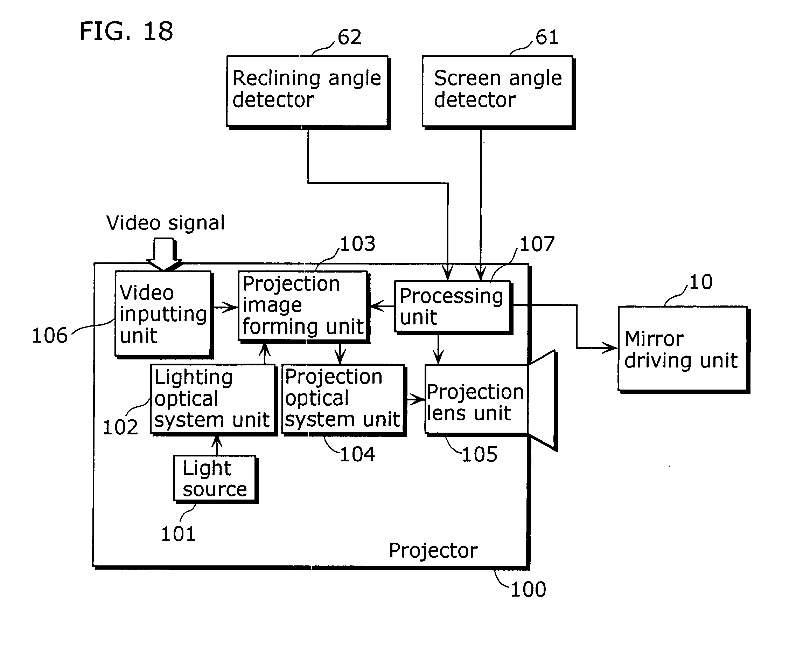

FIG. 18 is a block diagram showing the structure of the projector 100 for performing the correction processing on the light for showing the video and controlling the mirror driving unit 10.

The projector 100 comprises a light source 101, a lighting optical system unit 102, a projection image forming unit 103, a projection optical system unit 104, a video inputting unit 106, a projection lens unit 105 and a processing unit 107.

The video inputting unit 106 obtains the above-mentioned video signal and outputs the video signal to the projection image forming unit 103.

The lighting optical system unit 102 transforms the light that is outputted from the light source 101 into the light that is suitable for creating the light for showing the video and outputs it to the projection image forming unit 103.

The projection image forming unit 103 comprises a transparent liquid crystal panel, displays the image corresponding to the video signal that is outputted from the video inputting unit 106 on the transparent liquid crystal panel, passes the light that is outputted from the lighting optical system unit 102 through the transparent liquid crystal panel on which the image is displayed so as to generate the light. After that, the projection image forming unit 103 outputs the light that is generated in this way to the projection optical system unit 104.

Also, the projection image forming unit 103 in the embodiment performs the correction processing on the above-mentioned light in response to the instruction from the processing unit 107. In other words, the projection image forming unit 103 performs a later-explained trapezoid correction on the image that is displayed on the transparent liquid crystal panel.

The projection optical system unit 104 optically processes the light that is outputted from the projection image forming unit 103 and outputs it to the projection lens unit 105.

The projection lens unit 105 is structured by combining a plurality of lenses, and it adjusts the focus distance or optically changes the display size of the video that is shown on the screen in response to the instruction from the processing unit 107.

The processing unit 107 obtains the screen angle signal that is outputted from the screen angle detector 61 so as to specify the screen angle, and obtains the reclining angle signal that is outputted from the reclining angle detector 62 so as to specify the reclining angle.

After that, the processing unit 107 calculates the orientation of the first mirror 10a that makes it possible to keep the relative position of the video that is shown on the screen 20 at a predetermined position based on the specified screen angle and the reclining angle and controls the mirror driving unit 10 in a way that the orientation of the first mirror 10a is made to be the calculated one.

Further, the processing unit 107 calculates the correction amount necessary for the trapezoid correction based on the specified screen angle and reclining angle and notifies the projection image forming unit 10 of the correction amount so as to make it perform the trapezoid correction.

Also, the processing unit 107 calculates the focus distance from the projector 100 to the screen 20 based on the specified screen angle and the reclining angle and specifies the focus distance to the projection lens 206.

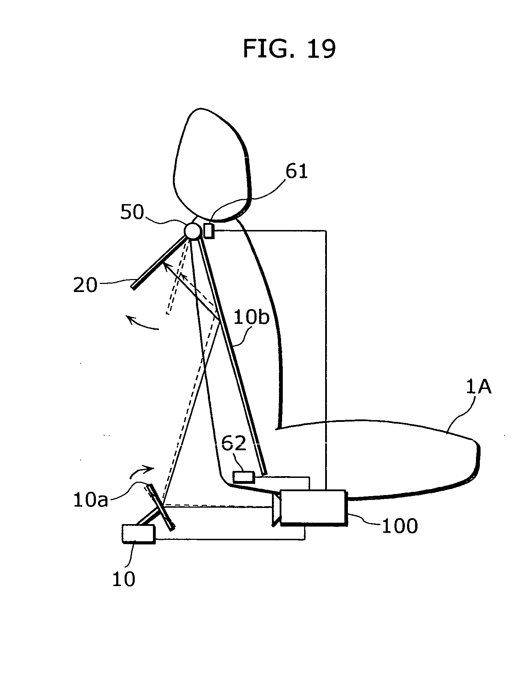

FIG. 19 is an illustration explaining how the orientation of the first mirror 10a changes by the rotation of the screen 20.

As shown in this FIG. 19, provided that the orientation of the first mirror 10a is fixed on condition that the screen 20 is swung above so as to make it come into user's view point, the relative position of the video that is shown on the screen 20 changes.

However, in the embodiment, as the screen angle detector 61 detects the screen angle and the projector 100 controls the mirror driving unit 10 to change the orientation of the first mirror 10a according to the detection result, it is possible to maintain the relative position of the video that is shown on the screen 20 at a predetermined position even in the case where the user swings the screen 20.

In other words, in the embodiment, it is possible to arbitrary set the orientation of the screen 20 maintaining the relative position of the video at a predetermined position without making the user bother to adjust the angle of the first mirror 10a.

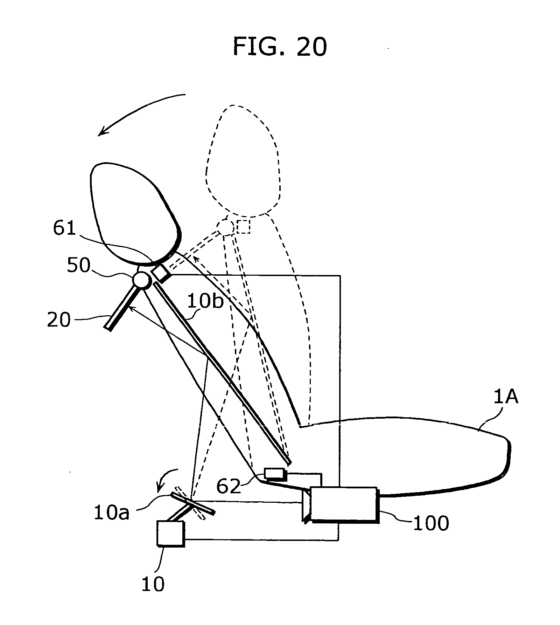

FIG. 20 is an illustration explaining how the orientation of the first mirror 10a changes by the reclining of the front seat 1A.

As shown in this FIG. 20, provided that the orientation of the first mirror 10a is fixed on condition that a passenger who is seated in the front seat 1A reclines the front seat 1A, the relative position of the video that is shown on the screen 20 moves.

However, in the embodiment, as the reclining angle detector 62 detects the reclining angle and the projector 100 controls the mirror driving unit 10 to change the orientation of the first mirror 10a according to the detection result, the front seat 1A maintains the relative position of the video that is shown on the screen at the predetermined position even in the case where the front seat 1A is reclined.

Next, the above-mentioned trapezoid correction that is performed by the projection image forming unit 103 of the projector 100 will be explained.

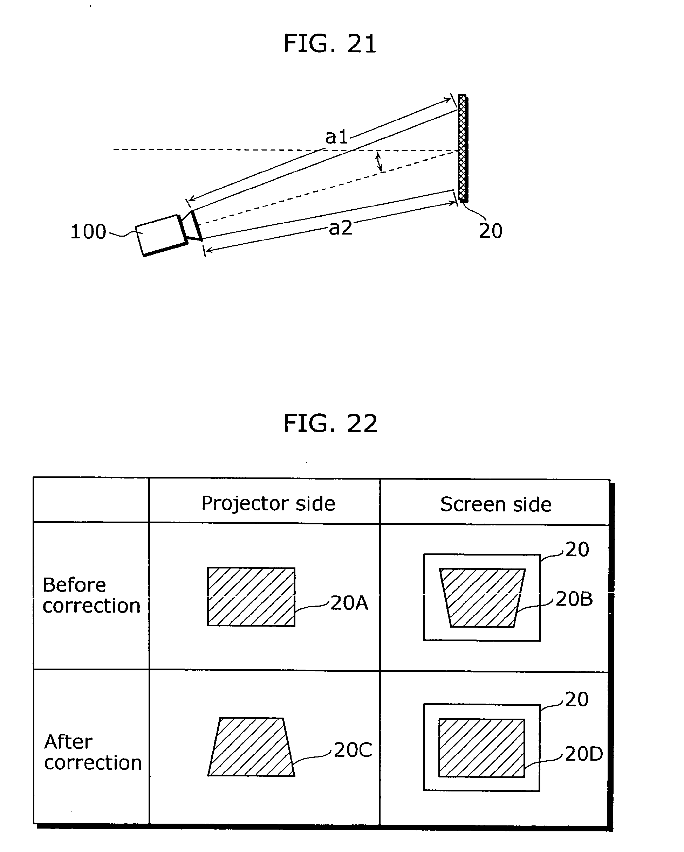

FIG. 21 and FIG. 22 are illustrations explaining the trapezoid correction.

For example, as shown in FIG. 21, when the projector 100 irradiates the light along the direction leaning from the orthogonal direction of the screen 20, a difference in the optical path length in each part of the light (optical path length a1 - optical path length a2) occurs. As a result, on the screen, the video that is shown on the part via long optical path length (a1) results in being bigger that the video that is shown on the part via short optical path length (a2).

In other words, in the case where no trapezoid correction is performed, as shown in FIG. 22, the form 20A of the video that the projector 100 tries to show is rectangle, but the form 20B of the video that is shown on the screen 20 results in being the trapezoid whose base is shorter than the top side. In other words, there occurs a distortion in the video.

Therefore, in the embodiment, the projection image forming unit 103 of the projector 100 performs a trapezoid correction in a way that the form of the video that is shown on the screen 20 becomes a rectangle based on the instruction from the processing unit 107 and the form of the video that is displayed on the transparent liquid crystal panel becomes a rectangle whose base is longer than the top side.

As a result, as shown in FIG. 22, the form 20C of the video that is shown by the projector 100 becomes a trapezoid and the form 20D of the video that is shown on the screen 20 becomes a rectangle.

In this embodiment, as a trapezoid correction is performed according to the screen angle and the reclining angle, it becomes possible to enable the user to view the video further easily by avoiding any distortion of the video that is shown on the screen 20.

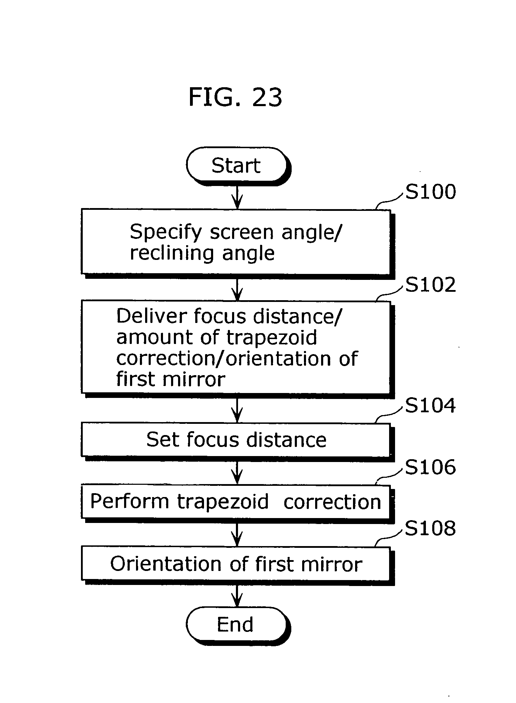

FIG. 23 is a flow chart showing the operation of the projector 100 in the embodiment.

First, the projector 100 specifies the screen angle by obtaining the screen angle signal from the screen angle detector 61 and specifies the reclining angle by obtaining the reclining angle signal from the reclining angle detector 62 (step S100).

Next, the projector 100 calculates a focus distance, a correction amount of the trapezoid correction and the orientation of the first mirror 10a based on the specified screen angle and reclining angle (step S102).

After that, the projector 100 sets the focus distance at the focus distance that is calculated in the step S102 (step S104), performs a trapezoid correction by the correction amount that is calculated in the step S102 (step S106) and sets the orientation of the first mirror 10a at the orientation that is calculated in the step S102 by controlling the mirror driving unit 10 (step S108).

In this embodiment, the projector 100 is set below the front seat 1A in this embodiment, it may be set below the rear seat 1B in a way that the projection exit faces the front.

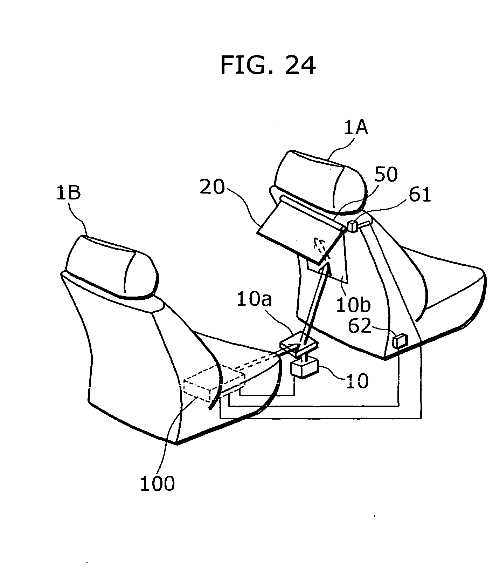

FIG. 24 is a block diagram showing the positional structure of the video displaying system in the case where the projector 100 is set below the rear seat 1B.

In this embodiment, it produces the same action and effect as the one mentioned above even in the case where the projector 100 is set below the rear seat 1B in this way.

### (Third Embodiment)

The video displaying system in the third embodiment of the present invention will be explained with reference to figures.

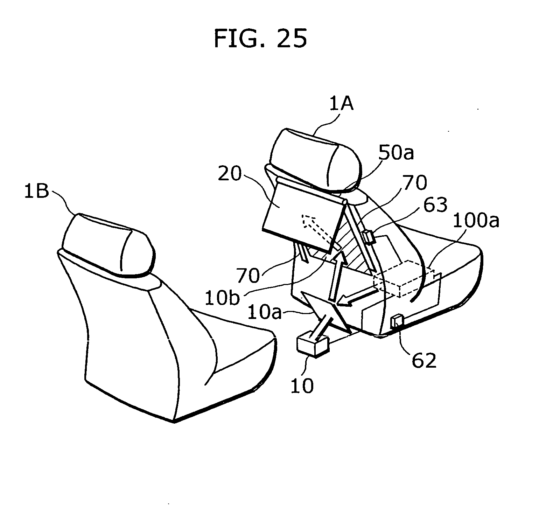

FIG. 25 is a block diagram showing the positional structure of the video displaying system in the third embodiment of the present invention.

This video displaying system enlarges the display size of the video like the embodiment 2 without narrowing the space in a car and makes the display position of the video variable so as to enables the user to view the video easily, and comprises a projector 100a for projecting the light for showing the video, the first mirror 10a for reflecting the light, the second mirror 10b for further reflecting the light that is reflected on the first mirror 10a, a mirror driving unit 10 for changing the orientation of the first mirror 10a, a screen 20 for displaying the video after receiving the light that is reflected on the second mirror 10b, a screen holder 50a that holds the screen 20, two guide rails 70 for moving the screen 20 and the screen holder 50a upward and downward on the back surface of the front seat 1A, a screen position detector 63 for detecting the position (screen position) that is along the guide rail 70 of the screen 20 and the screen holder 50a and a reclining angle detector 62 for detecting the reclining angle of the front seat 1A.

Here, in all components that comprises the above-mentioned embodiment, the same reference number is assigned to each component that has the same structure and function as the ones in the second embodiment and detailed explanation will be omitted.

The projector 100a is fixed on the front seat 1A like the projector 100 of the second embodiment in a way that the projection exit into which the light is projected is made to face the rear seat. After that, this projector 100a obtains the video signal showing video of a movie or television broadcasting from a device such as a DVD player or a TV tuner that is mounted on a car and projects the light for showing the video.

The overall structure of the screen holder 50a is made to be an approximate cylinder and it is set on the back surface of the front seat 1A via the guide rail 70 in a way that the axis is set along the width of the front seat 1A. After that, the screen holder 50a has the side of the screen 20.

The two guide rails 70 are set on the back of the front seat 1A in a way that both of the long sides are set vertically in a way that both of them are parallel to each other.

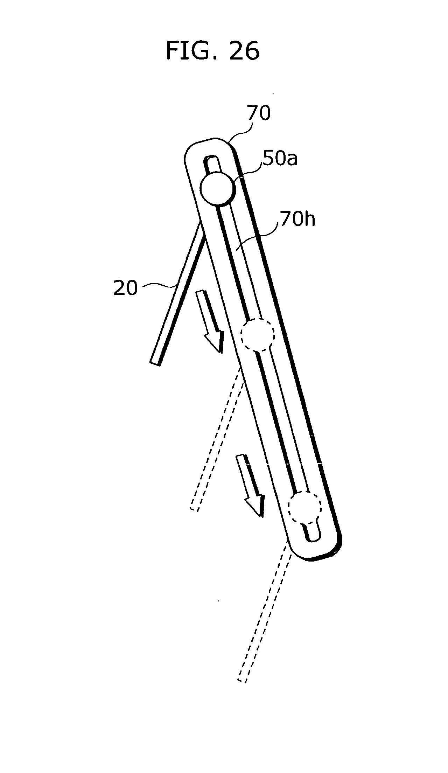

FIG. 26 is a side view of the guide rail 70, the screen 20 and the screen holder 50a.

A long slender hole 70h is structured along the two guide rails 70 in the long side direction. The screen holder 50a is inserted into the long hole 70h inside the two guide rails 70 in a way that the two guide rails 70 stands holding the screen holder 50a.

After that, in the case where power to the long side direction is added on the screen holder 50a or the screen 20, the two guide rails 70 moves the screen holder 50a or the screen 20 along the direction of the power. Also, in the case where this movement is made, during the movement, the angle between the screen 20 and the guide rail 70 is maintained.

In this way, in this embodiment, the projector 100a is placed below the front seat 1A, the light from the projector 100a is focused on the screen 20 that is attached to the front seat 1A by using the reflection by the first mirror 10a and the second mirror 10b, the video is displayed on the screen 20, which makes it possible to display the video big without narrowing the car space and enables a user to view the video easily. Also, in this embodiment, as the screen 20 is attached to the back of the front seat 1A via the screen holders 50a and the guide rails 70, the user who is seated in the rear seat 1B can adjust the screen 20 at the height of his or her viewpoint by manually moving the screen up and down and enables the user to view the video that is shown on the screen 20 more easily.

Further, in this embodiment, correction processing is performed on the light that the projector 100a projects in a way that moving the screen 20 up and down and reclining the front seat 1A do not cause any change of the position of the video (the relative position to the screen 20 of the video) and any distortion of the video that is shown on the screen and the mirror driving unit 10 is controlled to change the orientation of the first mirror 10a.

In other words, in this embodiment, a screen position detector 63 and a reclining angle detector 62 are included so that the projector 100a can perform the above-mentioned projector 100a and control.

Here, the screen position detector 63 and the reclining angle detector 62 have the same circuit structure as the circuit structure of the screen angle detector 61 of the second embodiment, and the reclining angle detector 62 outputs the voltage signal that changes according to the reclining angle of the front seat 1A as the reclining angle signal, and the screen position detector 63 outputs the voltage signal that changes according to the screen position as the screen position signal.

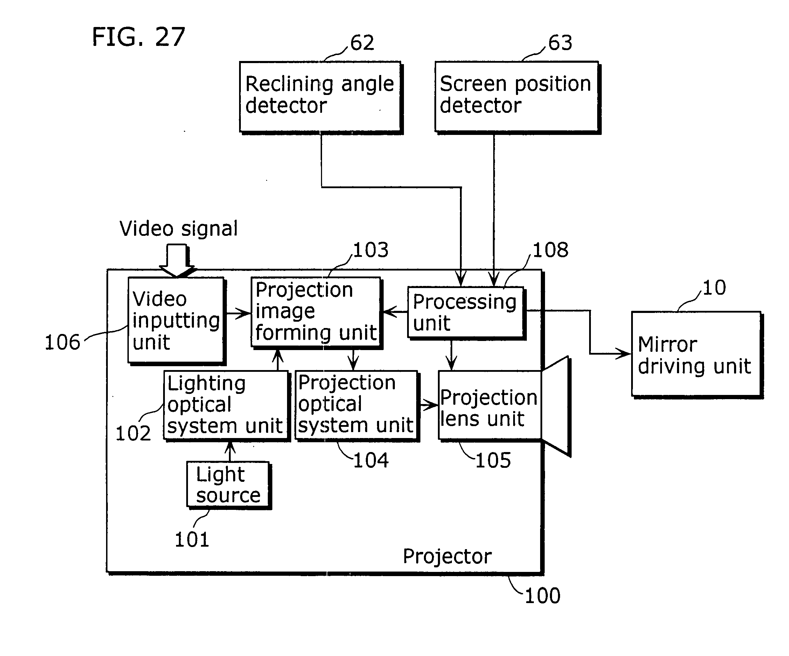

FIG. 27 is a block diagram showing the structure of the projector 100a that performs correction processing on the light and controls the mirror driving unit 10.

The projector 100a comprises a light source 101, a lighting optical system unit 102, a projection image forming unit 103, a projection optical system unit 104, a video inputting unit 106, a projection lens unit 105 and the processing unit 108.

Here, the light source 101, the lighting optical system unit 102, the projection image forming unit 103, the projection optical system unit 104, the video inputting unit 106 and the projection lens unit 105 in this embodiment, have the same structure as the ones that are included in the projector 100 of the second embodiment and the detailed explanations on them will be omitted.

The processing unit 108 specifies the screen position by obtaining the screen position signal that is outputted from the screen position detector 63 and specifies the reclining angle by obtaining the reclining angle signal that is outputted from the reclining angle detector 62.

After that, the processing unit 108 calculates the orientation of the first mirror 10a which can maintain the relative position of the video that is shown on the screen 20 at a predetermined position based on the specified screen position and reclining angle and controls the mirror driving unit 10 to set the orientation of the first mirror 10a to the calculated one.

Further, the processing unit 108 calculates the correction amount that is needed for a trapezoid correction based on the specified screen position and the reclining angle and notifies the projection image forming unit 103 of the correction amount so as to make it perform the same trapezoid correction as the one in the second embodiment.

Also, the processing unit 108 calculates the focus distance from the projector 100a to the screen 20 based on the specified screen position and the reclining angle and specifies the focus distance to the projection lens 206.

The projection lens unit 105 adjusts the focus distance according to the instruction from the processing unit 108 and optically changes the display size of the video that is shown on the screen 20.

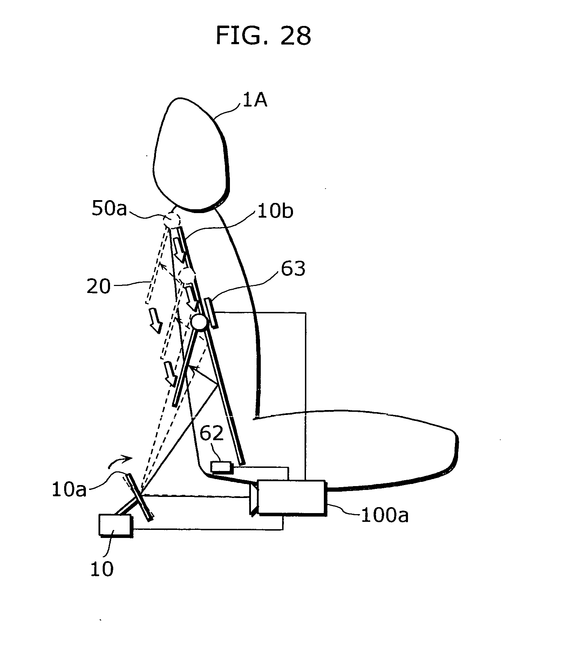

FIG. 28 is an illustration explaining how the orientation of the first mirror 10a changes by the up and down movement of the screen 20.

As shown in this FIG. 28, provided that the orientation of the first mirror 10a is fixed on condition that the user moves the screen 20 to a lower part so as to adjust it to the height of his or her viewpoint, the relative position of the video that is shown on the screen moves.

However, in this embodiment, as the screen position detector 63 detects the screen position and the projector 100a controls the mirror driving unit 10 to change the orientation of the first mirror 10a according to the detection result, the user can maintain the relative position of the video that is shown on the screen at the predetermined position even in the case where the user moves the screen 20.

In other words, in this embodiment, the user can arbitrary set the height of the screen 20 maintaining the relative position of the video at the predetermined position without bothering to adjust the angle of the first mirror 10a.

Further, in this embodiment, like the second embodiment, as the reclining angle detector 62 detects the reclining angle and the projector 100a controls the mirror driving unit 10 to change the orientation of the first mirror 10a according to the detection result, the user can keep the relative position of the video that is shown on the screen 20 at the predetermined position even in the case where the front seat 1A is reclined.

Also, in this embodiment, like the second embodiment, a trapezoid correction is performed according to the screen position and the reclining angle, which enables the user to view the video more easily by avoiding any distortion of the video that is shown on the screen 20.

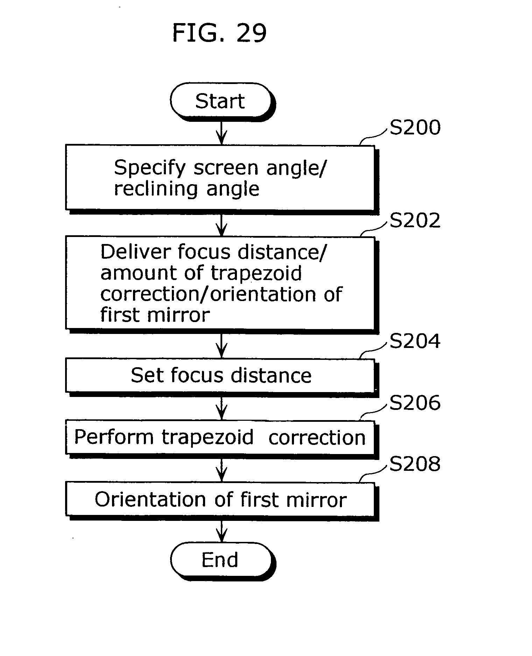

FIG. 29 is a flow chart showing the operation of the projector 100a in this embodiment.

First, the projector 100a specifies the screen position by obtaining the screen position signal from the screen position detector 63 and specifies the reclining angle by obtaining the reclining angle signal from the reclining angle detector 62 (step S200).

Next, the projector 100a calculates the focus distance, the correction amount of the trapezoid correction and the orientation of the first mirror 10a based on the specified screen position and the reclining angle (step S202).

After that, the projector 100a sets a focus distance at the focus distance that is calculated in the step S202 (step S204), performs a trapezoid correction by the correction amount that is calculated in the step S202 (step S206), and sets the orientation of the first mirror 10a at the orientation that is calculated in the step S202 by controlling the mirror driving unit 10 (step S208).

In this embodiment, the projector 100a is set below the front seat 1A, but it may be set around the lower part of the rear seat 1B in a way that the projection exit face the front seat like the variation in the second embodiment.

### (Fourth Embodiment)

The video displaying system in the fourth embodiment of the present invention will be explained with reference to figures below.

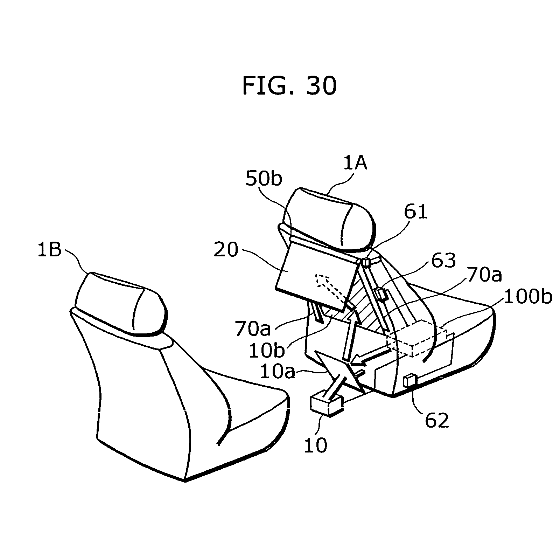

FIG. 30 is a block diagram showing the positional structure of the video displaying system in the forth embodiment of the present invention.

This video displaying system is for enabling the user to view the video more easily by enlarging the display size of the video without narrowing the space in a car like the second embodiment and making the display position of the video variable, and comprises a projector 100b for projecting the light for showing the video, the first mirror 10a for reflecting the light, the second mirror 10b for further reflecting the light that is reflected on the first mirror 10a, the mirror driving unit 10 for changing the orientation of the first mirror 10a, a screen 20 for displaying the video after receiving the light that is reflected on the second mirror 10b, a screen holder 50b for holding the screen 20, two guide rails 70a for moving the screen 20 and the screen holder 50b up and down on the back of the front seat 1A, a screen angle detector 61 for detecting the angle (the screen angle) to the front seat 1A (the second mirror 10b) of the screen 20, a screen position detector 63 for detecting the position (screen position) along the guide rails 70a of the screen 20 and the screen holder 50b and the reclining angle detector 62 for detecting the reclining angle of the front seat 1A.

Here, in all the components that are included in the above-mentioned embodiment, the same reference numbers are assigned to the components that have the same structure and function as the second embodiment and detailed explanations on them will be omitted.

The projector 100b is fixed below the front seat 1A in a way that the projection exit into which the light is projected is made to face the rear seat. After that, this projector 100b obtains the video signal showing the video of a movie or television broadcasting from a device such as a DVD player or a TV tuner that is mounted in a car and projects the light for showing the video.

Two guide rails 70a are set on the back of the front seat 1A in a way that the long sides are parallel to each other and vertical.

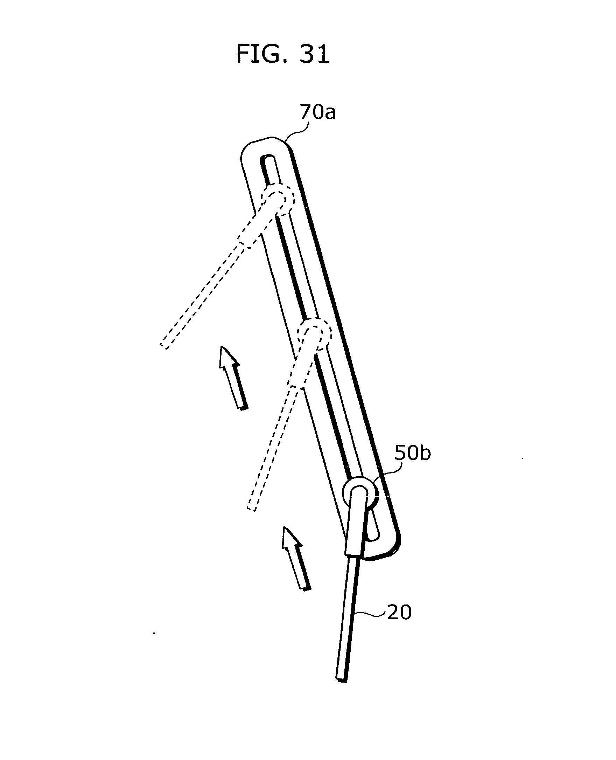

FIG. 31 is an outline side view of the guide rails 70a, the screen 20 and the screen holder 50b.

The two guide rails 70a hold both edges of the screen holder 50b, in the case where power to the long side direction is added to the screen holder 50b or the screen 20 that is held by the screen holder 50b, and moves the screen holder 50b and the screen 20 along the power direction.

Also, as mentioned above, the guide rail 70a and the screen holder 50b are respectively structured in a way that the angle between the screen 20 and the guide rails 70a increases in the case where the screen 20 moves to the upper part of the long sides while the angle between the screen 20 and the guide rails 70a decreases in the case where the screen 20 moves to the lower part of the long sides.

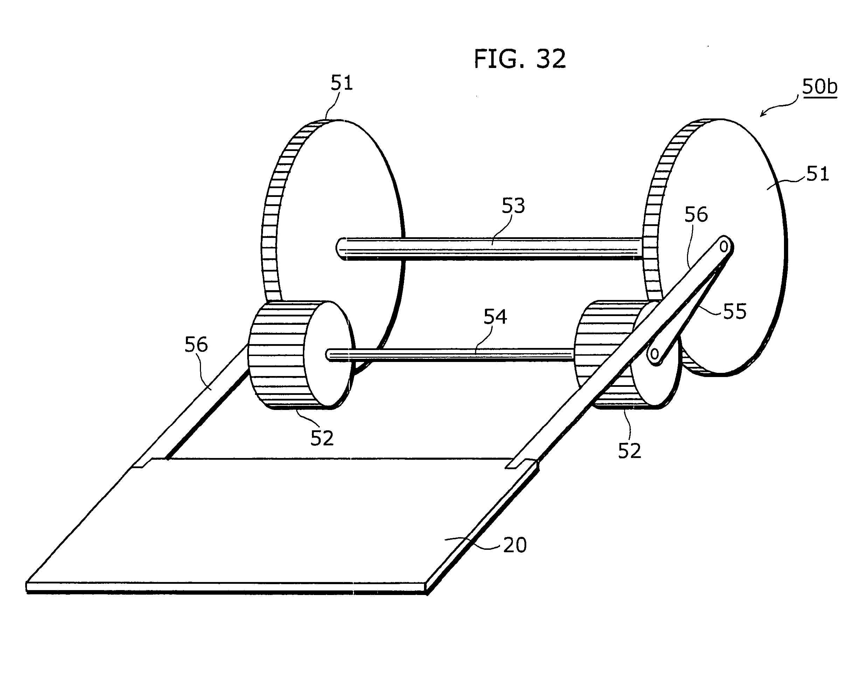

FIG. 32 is a perspective view of the screen holder 50b.

The screen holder 50b comprises two gear wheels 51, a connection column 53 for connecting the centers of these gear wheels 51, small gears 52 that gear respective gear wheels 51, an axis column 54 for connecting the centers of these small gears 52, a holding piece 55 for holding the state where each gear wheel 51 gears the corresponding small gear 52, and an arm 56 for holding the screen 20 in a way that one end holds the screen 20 and the other end is set at the center of the gear wheel 51.

The screen holder 50b in this way, the gear wheels 51 swings by the rotation of the small gears 52 and the rotation enables both the arms 56 to swing the screen 20 making the center of the gear wheel as the axis.

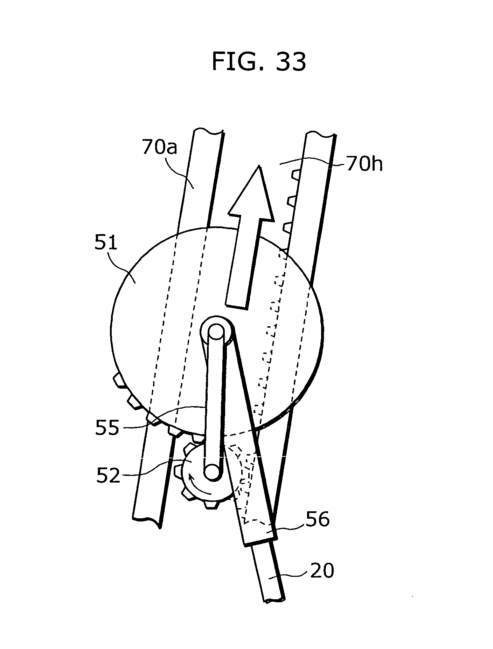

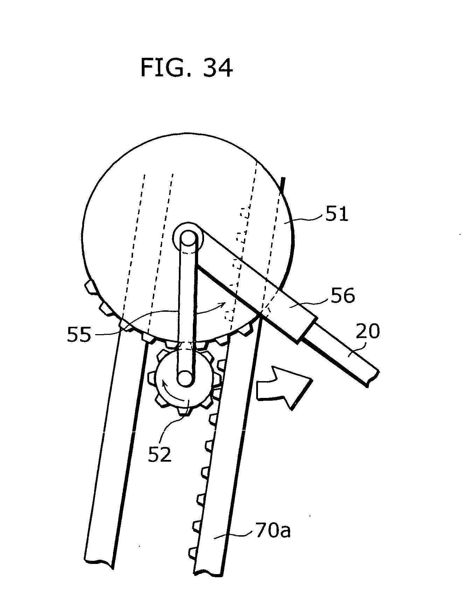

FIG. 33 and FIG. 34 are detailed perspective diagrams of the guide rail 70a and the screen holder 50b.

As shown in FIG. 33 and FIG. 34, a long slender hole 70h is structured on the respective guide rail 70a along the long side. A plurality of convexes are structured inside this long holes 70h, a small gear 52 of the screen holder 50b is inserted in each long hole 70h in a way that it gears those convexes.

In this way, in the case where power is added to the gears toward the upper direction of the screen 20 or the screen holder 50b (the direction indicated by an arrow in FIG. 33), the small gears 52 rotate clockwise, the rotation rotates the gear wheels 51 counterclockwise and this rotation rotates arms 56. As a result, as shown in FIG. 34, the angle between the screen 20 and the guide rail 70a increases.

In this way, in the embodiment, the projector 100b is placed below the front seat 1A, the light from the projector 100b is focused on the screen 20 that is attached to the front seat 1A by using the reflection by the first mirror 10a and the second mirror 10b, the video is displayed big without narrowing the car space by displaying the video on the screen 20 so as to enable the user to view the video easily. Also, in this embodiment, attaching the screen 20 to the back of the front seat 1A via the screen holder 50b and the guide rails 70a makes it possible to widen the screen angle in the case of moving the screen 20 to the upper part manually or narrower the screen angle in the case of moving the screen 20 to the lower part manually, which enables the user who is seated in the rear seat 1B to change the position of the screen 20 more flexibly than in the second and third embodiments, and thus it is possible to enable the user to view the video that is shown on the screen 20 more easily.

In other words, in the embodiment, it is possible to make the longitudinal size larger than the one in the second and third embodiments for user's convenience.

Further, in the embodiment, in order not to allow moving the screen 20 up and down and rotating the screen 20 and reclining the front seat 1A to change the position of the video that is shown on the screen 20 (relative position to the screen 20 of the video) or contort the video, the projector 100b performs correction processing on the light to be projected and controls the mirror driving unit 10 so as to change the orientation of the first mirror 10a.

In other words, in the embodiment, the screen angle detector 61, the reclining angle detector 62 and the screen position detector 63 are equipped so that the projector 100b can perform the above-mentioned correction processing and control.

Here, the screen angle detector 61, the reclining angle detector 62 and the screen position detector 63 have the same circuit structure as the circuit structure of the screen angle detector 61 of the second embodiment. In other words, the screen angle detector 61 outputs the voltage signal that changes according to the screen angle as a screen angle signal, and the reclining angle detector 62 outputs the voltage signal that changes according to the reclining angle of the front seat 1A as the reclining angle signal, and the screen position detector 63 outputs the voltage signal that changes according to the screen position as the screen position signal.

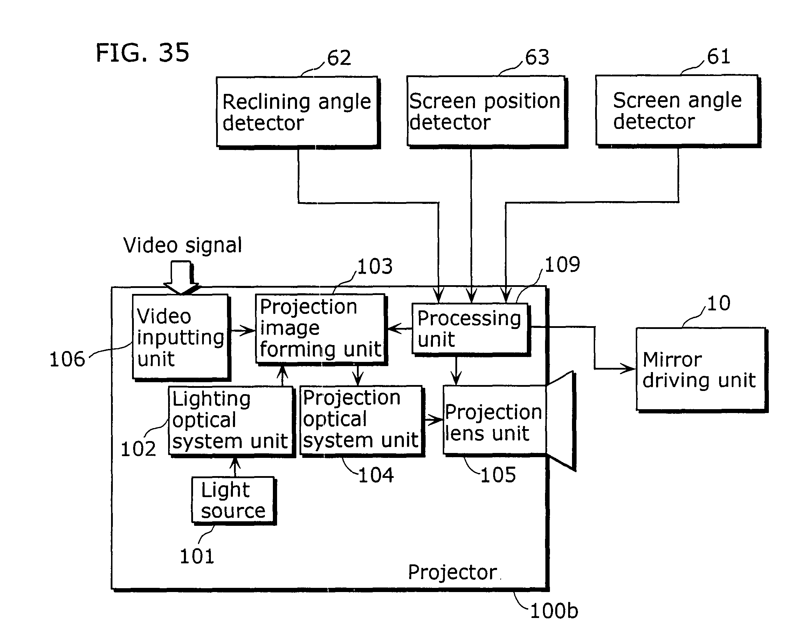

FIG. 35 is a block diagram showing the structure of the projector 100b for performing the correction processing on the light and controlling the mirror driving unit 10.

The projector 100b comprises a light source 101, a lighting optical system unit 102, a projection image forming unit 103, a projection optical system unit 104, an image inputting unit 106, a projection lens unit 105 and the processing unit 109.

Here, the light source 101, the lighting optical system unit 102, the projection image forming unit 103, the projection optical system 104, the video inputting unit 106 and the projection lens unit 105 in this embodiment have the same structure and function as the ones that are included in the projector 100 of the second embodiment, and detailed explanations on them will be omitted.

The processing unit 109 specifies the screen position by obtaining the screen position signal that is outputted from the screen position detector 63, specifies the reclining angle by obtaining the reclining angle signal that is outputted from the reclining angle detector 62 and further specifies the screen angle by obtaining the screen angle signal that is outputted from the screen angle detector 61.

After that, the processing unit 109 calculates the orientation of the first mirror 10a which can maintain the relative position of the video that is shown on the screen 20 at a predetermined position and controls the mirror driving unit 10 in a way that the orientation of the first mirror 10a is made to be the calculated one based on the specified screen position, the reclining angle and the screen angle.

Further, the processing unit 109 calculates a correction amount that is needed for a trapezoid correction based on the specified screen position, the reclining angle and the screen angle and performs the same trapezoid correction as the one in the second embodiment by notifying the projection image forming unit 103 of the correction amount.

Also, the processing unit 109 calculates the focus distance from the projector 100b to the screen 20 based on the specified screen position, the reclining angle and the screen angle and specifies the focus distance to the projection lens 206.

The projection lens unit 105 adjusts the focus distance according to the instruction from the processing unit 109 and optically changes the display size of the video that is shown on the screen.

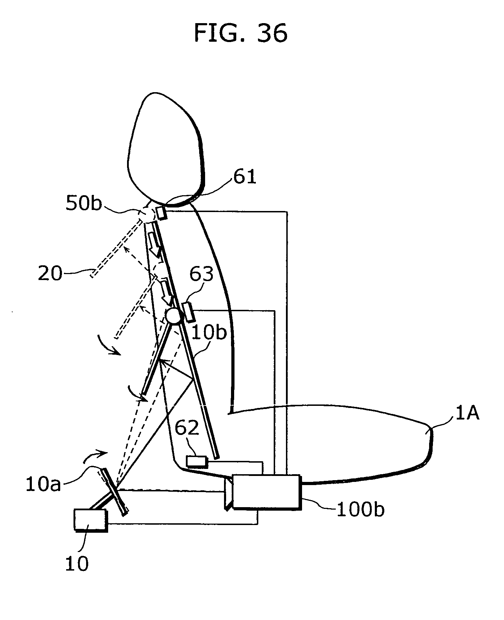

FIG. 36 is an illustration explaining how the orientation of the first mirror 10a changes by the up and down movement and the rotation of the screen 20.

As shown in this FIG. 36, the screen angle decreases in the case where the user moves the screen 20 to a lower part in a way that it is adjusted to the height of his or her viewpoint. After that, provided that the orientation of the first mirror 10a is fixed, the relative position of the video that is shown on the screen 20 moves.

However, in the embodiment, as the screen position detector 63 detects the screen position, the screen angle detector 61 detects the screen angle, the projector 100b controls the mirror driving unit 10 to change the orientation of the first mirror 10a according to these detection result, the user can keep the relative position of the video that is shown on the screen 20 at the predetermined position even in the case where the user moves or rotates the screen 20.

In other words, in the embodiment, it is possible to arbitrary set the height or the angle of the screen 20 maintaining the relative position of the video at the predetermined position without bothering to adjust the angle of the first mirror 10a.

Further, in the embodiment, like the second embodiment, as the reclining angle detector 62 detects the reclining angle, the projector 100b controls the mirror driving unit 10 to change the orientation of the first mirror 10a according to the detection result, the user can maintain the relative position of the video that is shown on the screen 20 at the predetermined position even in the case where the user reclines the front seat 1A.

The projector 100b is set below the front seat 1A in this embodiment, but it is set below the rear seat 1B in a way that the projection exit is made to face the front seat like in the variation of the second embodiment.

### (Variation)

Next, the variation of the video displaying system in the above-mentioned embodiment will be explained.

The screen holder of the video displaying system concerning the variation is structured so that it can arbitrary set screen angles irrespective of screen positions, that is, positions on the guide rails 70a.

Further, the projector 100b of the video displaying system concerning the variation makes a difference in the contents of the control on the mirror driving unit 10 according to the correction amount of the trapezoid correction.

In other words, the processing unit 109 of the projector 100b calculates the correction amount that is needed for the trapezoid correction based on the reclining angle, the screen angle and the screen position, but it calculates the correction amount (the first correction amount) that is needed in the case where the light is projected on the screen 20 using the reflection of the second mirror 10b, and the correction amount (the second correction amount) that is needed in the case where the light is directly projected on the screen 20 from the first mirror 10a without using the reflection of the second mirror 10b. The processing unit 109 that calculates the first correction amount and the second correction amount like this compares these pieces of correction amount, and it control the mirror driving unit 10 to use the reflection of the second mirror 10b so as to change the orientation of the first mirror 10a in the case where the first correction amount is equal to or smaller than the second correction amount. On the other hand, in the case where the first correction amount is bigger than the second correction amount, the processing unit 109 controls the mirror driving unit 10 not to use the reflection of the first mirror 10a so as to set the orientation of the first mirror 10a.

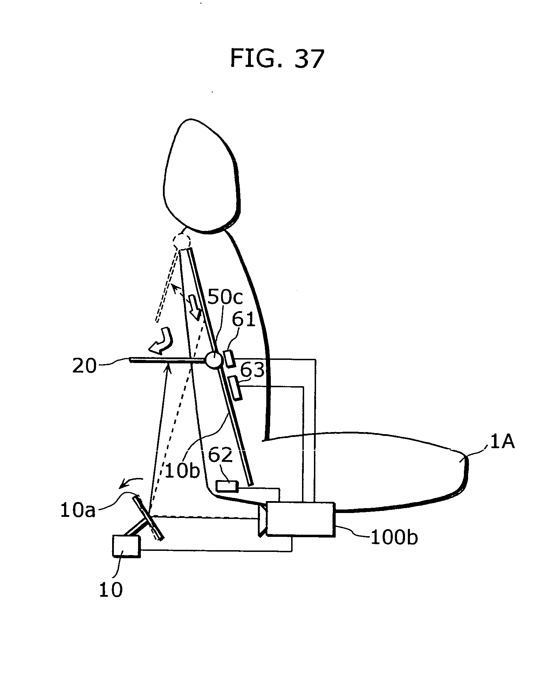

FIG. 37 is an illustration explaining how the processing unit 109 of the projector 100b changes the orientation of the first mirror 10a according to the correction amount.

First, in the case where the screen 20 is on the upper part of the front seat 1A and the screen angle is comparatively small, the angle between the light in the traveling direction towards the screen 20 and the screen 20 is bigger in the case where the light is reflected on the second mirror 10b than the one in the case where the light is not reflected on the second mirror 10b. In other words, in the case where the light is not reflected on the second mirror 10b, the light from diagonal direction is projected on the screen 20.

In the above-mentioned case, the correction amount (the first correction amount) is small in the case where the reflection of the second mirror 10b is used, while the correction amount (the second correction amount) is big in the case where the reflection of the second mirror 10b is not used.

Therefore, the processing unit 109 of the projector 100b in the variation calculates the first correction amount and the second correction amount so as to compare them with each other, and in the case where the first correction amount is judged to be smaller than the second correction amount, controls the mirror driving unit 10 to reflect the light on the second mirror 10b so as to set the orientation of the first mirror 10a.

Next, in the case where the screen 20 is moved from the upper part to the lower part of the front seat 1A and the screen angle is adjusted comparatively widely, the angle between the light in the traveling direction towards the screen 20 and the screen 20 is smaller in the case where the light is reflected on the second mirror 10b than the one in the case where the light is not reflected on the second mirror 10b. In other words, in the case where the light is reflected on the second mirror 10b, the light from the diagonal direction is projected on the screen 20.

In the above-mentioned case, the correction amount (the first correction amount) in the case where the reflection of the second mirror 10b is used is small, while the correction amount (the second correction amount) in the case where the reflection of the second mirror 10b is not used is big.

Therefore, the processing unit 109 of the projector 100b in the variation calculates the first correction amount and the second correction amount so as to compare them with each other, and in the case where the first correction amount is judged to be smaller than the second correction amount, controls the mirror driving unit 10 to reflect the light on the second mirror 10b so as to set the orientation of the first mirror 10a.

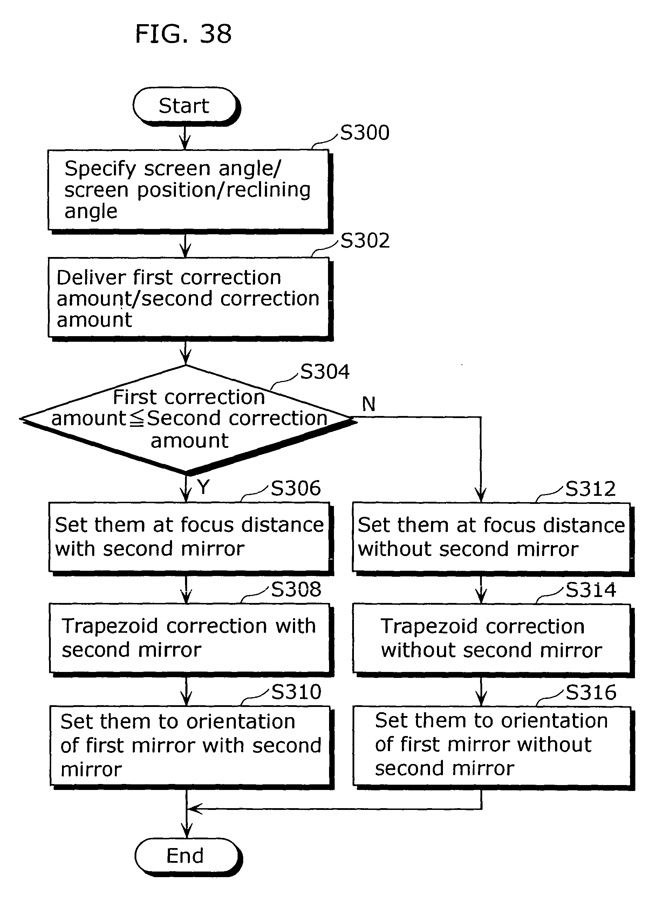

FIG. 38 is a flow chart showing the operation of the projector 100b in the variation.

First, the projector 100b specifies the screen position by obtaining the screen position signal from the screen position detector 63, specifies the reclining angle by obtaining the reclining angle signal from the reclining angle detector 62, and further, specifies the screen angle by obtaining the screen angle signal from the screen angle detector 61 (step S300).

Next, the projector 100b calculates the focus distance, the orientation of the first mirror 10a and the first correction amount in the case where the reflection of the second mirror 10b is used based on the specified screen position, reclining angle and screen angle, and calculates the focus distance, the orientation of the first mirror 10a and the second correction amount in the case where the reflection of the second mirror 10b is not used (step S302).

After that, the projector 100b compares the first correction amount with the second correction amount (step S304). Here, in the case where it judged that the first correction amount is equal to or smaller than the second correction amount (Y in the step S304), the projector 100b sets a focus distance at the focus distance in the case where the reflection of the second mirror 10b is used among focus distances that are calculated in the step S302 (step S306). Further, the projector 100b performs a trapezoid correction by the first correction amount that is calculated in the step S302 (step S308), and controls the mirror driving unit 10 to change the orientation of the first mirror 10a to the orientation in the case where the reflection of the second mirror 10b is used among the orientations that are calculated in the step S302 (step S310). As the result, the light is projected from the projector 100b on the screen 20 after passing through the first mirror 10a and the second mirror 10b.

On the other hand, in the case where the first correction amount is judged to be bigger than the second correction amount (N in the step S304), the projector 100b sets a focus distance at the focus distance in the case where the reflection of the second mirror 10b is not used among the focus distances that are calculated in the step S302 (step S312). Further, the projector 100b performs a trapezoid correction by the second correction amount that is calculated in the step S302 (step S308), and controls the mirror driving unit 10 to change the first mirror 10a to the orientation in the case where the reflection of the second mirror 10b is not used among the orientations that are calculated in the step S302 (step S310). As the result, the light is projected from the projector 100b on the screen 20 after passing through the first mirror 10a without passing through the second mirror 10b.

In this way, as it is possible to arbitrary set the screen angle irrespective of the screen position in the variation, it is possible to appropriately adjust the position of the screen 20 to the viewpoint of the user, which enables the user to view the video that is shown on the screen 20 more easily.

Also, as whether the reflection of the second mirror 10b should be used or not is selected so as to make the correction amount of the trapezoid correction small in the variation, it is possible to show a vivid video on the screen 20 without performing any forced trapezoid correction.

In other words, as shown in FIG. 37, it is possible to show a vivid video on the screen 20 because the trapezoid correction is performed using a small correction amount even in the case where the screen 20 is set approximately horizontally. As a result, in the variation, displaying the video of the game on the screen 20 makes it possible to use it as a table game and improve the userfriendliness.

Further, in the variation, using a tough material for the screen 20 makes it possible to use the screen 20 as a table, which improves the userfriendliness, for example, a video of a map can be displayed on the screen 20 where items such as a compass can be put on. Also, adding a touch panel function to the screen 20 makes it possible to improve the userfriendliness.

This variation compares the first correction amount with the second correction amount and use/disuse of the second mirror 10b is switched according to the result, but it is possible to compare the first correction amount with a predetermined threshold value without calculating the second correction amount and switch use/disuse of the second mirror 10b according to the result.

In other words, the processing unit 109 of the projector 100b compares the first correction amount with the predetermined threshold value at the time of calculating the first correction amount and, in the case where it is judged that the first correction amount is bigger than the threshold value, it controls the mirror driving unit 10 to set the angle of the first mirror 10a so as not to reflect the light on the second mirror 10b.

The video displaying system concerning the present invention has already been explained with reference to embodiments 1 to 4 and the variation, but the present invention is not limited to these.

For example, the first embodiment and the variation is formed so that the moving device 200A can move in back and forth direction, but it is possible to form them so that it can move in right and left direction or in a diagonal direction. In this case, the mirror 10A changes the orientation according to the movement of the moving device 200A and reflects the light that is projected from the projector 100A toward the back of the screen 21.

Further, in the first embodiment and the variation, the mirror 10A is fixed on the front seat 1A, but it can be fixed on the floor of the car.

In this case, the angle, from the mirror 10A, between the projector 100A and the screen 21 changes according to the movement of the front seat 1A in the back and forth direction, the mirror 10A changes the orientation according to the movement of the front seat 1A in the back and forth direction and reflects the light that is projected from the projector 100A on the screen 21.

Also, in the first embodiment and the variation, a motor 225 and car wheels 201 are mounted on the moving device 200A and they are made to move back and forth, but the present invention is not limited to this, for example, it is possible to move the moving device 200A back and forth by using another mean such as sliding.

Further, in the first embodiment and the variation, a size instruction signal is outputted from a remote controller 30 via a communication medium by infrared rays, but it is needless to say that it may be outputted via another wire/wireless communication medium.

Also, in the embodiments 2 to 4 and the variation, the screen angle is set at a predetermined angle or changed at the time when the video displaying system is operated, while the screen holder may be structured so that the screen angle becomes 0 at the time when the displaying system is not operated, that is, the screen 20 can be laid against the backrest of the front seat 1A. In this way, the screen 20 can be held down when the video displaying system is not used, and thus it is possible to save the car space.

Further, in the embodiments 2 to 4 and the variation, a processing unit is mounted in the projector, but the processing unit may be mounted outside the projector.

Also, in the embodiments 2 to 4 and the variation, changing the orientation of the first mirror 10a avoids the variation of the relative position of the video, which is caused by the change of the screen angle, the screen position and the reclining angle, but it is possible to change the position of the first mirror 10a instead of the orientation of the first mirror 10a or change the orientation and the position of the first mirror 10a.

Further, in the embodiments 2 to 4 and the variation, the first mirror 10a, the mirror driving unit 10 and the projector are separate, but they may be integrated into one. In other words, the first mirror 10a, the mirror driving unit 10 and the projector are held in a single enclosure and they are structured as an integrated one. In this way, it is possible to shield incoming light and protect the first mirror 10a from user's legs.

Also, in the embodiments 2 to 4 and the variation, it is possible to include a shielding cover for covering the light path of the light from the projector to the screen 20 via the first mirror 10a and the second mirror 10b. This shielding cover is structured using cloth, metal or plastic with a light blocking effect. In this way, it is possible to prevent incoming light from affecting the light and enables the user to view the video more vividly.

Further, the embodiment 2 to 4 and the variation makes the projector adjust the focus distance according to the change in the screen angle, the screen position and the reclining angle, but it is possible to make the projector adjust the display size of the video so that the display size of the video that is shown on the screen can be maintained irrespective of these changes. This enables the user to view the video more easily.

Also, in the embodiments 2 to 4 and the variation, the screen 20 is moved or swung by user's manual operation, but it may be electrically moved or swung. In this way, a screen driving unit for driving the screen 20 so as to change at least one of the screen angle and the screen position of the screen 20 and an operation unit for controlling the screen driving unit by user's operation. In this way, the user can easily and arbitrary set at least one of the screen angle and the screen position by operating the operation unit.

Further, in the embodiments 2 to 4 and the variation, an automatic stop device for stopping the projection of the light from the projector according to the reclining angle may be included. In the case where the reclining angle is a predetermined angle or more, there is a possibility that the video is not shown on the screen 20. Therefore, the automatic stop device stops the projection of the light from the projector in the case where it is judged that the reclining angle is the predetermined angle or more. In this way, it is possible to prevent the light from being outputted in a state that the video cannot be viewed in this system and thus it is possible to save energy.

Also, in the embodiments 2 to 4 and the variation, the projector is set so that the light can be horizontally projected backward, but the direction toward which the light is projected is not limited to this. For example, the projector may be set so that the light is projected in a side direction, in a diagonal direction or in an upward direction.

Also, in the embodiments 1 to 4 and the variation, one or two reflection mirrors are included, but three or more reflection mirrors may be included. In this case, it is possible to set the light path of the light more easily and further improve the flexibility of the positional design of the video displaying system.

Also, the embodiments 1 to 4 and the variation make the projector obtain the video signal from outside, but it is also possible to make the projector generate the video signal. In this case, the projector, for example, has the function of a device such as a DVD player and a TV tuner.

Further, in the embodiments 1 to 4 and the variation, this system is set in the car, but it may be set inside the train, bus and airplane. In this case, it is possible to enlarge the display size of the video without narrowing inside the car and airplane so as to enable the user to view the video more easily. Further, in the embodiments 2 to 4 and the variation, it is possible to make the display position of the video variable.

Also, the embodiments 1 to 4 and the variation includes a transparent liquid crystal panel in the projection image forming unit, but it is possible to include a reflection liquid crystal panel or a Digital Micromirror Device (DMD) or a CRT instead of the transparent liquid crystal panel. The above-mentioned DMD is an aggregation of microminiature mirrors which has mobility, at the time when light is focused on this DMD, an image source is formed according to the reflection light of each mirror. After that, the projector with a DMD like this is structured as a projector of DLP style. (DLP is a trademark of "Texas instruments incorporated")

## Claims

1. A video displaying system for displaying video in space where a first seat and a second seat are set, comprising:
a projection unit, which is placed around the lower part of the first seat, operable to project light for showing the video; and
a screen, which is set on the first seat or the second seat, for displaying the video by receiving the light that is projected by the projection unit.

2. The video displaying system according to Claim 1, further comprising a reflection unit operable to reflect the light that is projected from the reflection unit,
wherein the screen displays the video by receiving the light that is reflected by the reflection unit.

3. The video displaying system according to Claim 2, further comprising a movement unit operable to move the projection unit by user's operation in a way that a light path length between the projection unit and the screen is changed.

4. The video displaying system according to Claim 2,
wherein the first seat or the second seat on which the screen is set is movable, and
the video displaying system further comprises:
a seat position detecting unit operable to detect a position of the first seat or the second seat; and
a light path length fixing unit operable to move the projection unit in a way that a light path length between the projection unit and the screen is maintained based on a detection result obtained by the seat position detecting unit.

5. The video displaying system according to Claim 2,
wherein the first seat or the second seat on which the screen is set is movable, and
the video displaying system further comprises a holding unit, which is set on the first seat or the second seat, operable to hold the projection unit.

6. The video displaying system according to Claim 2,
wherein the projection unit is placed below the first seat whose part facing the projection unit is openable and closable.

7. The video displaying system according to Claim 2,
wherein the screen displays the video on a surface of the screen by receiving the light on a back of the screen.

8. The video displaying system according to Claim 2,
wherein the video displaying system is placed in a car where the first seat is a front seat and the second seat is a back seat.

9. The video displaying system according to Claim 2, further comprising a holding unit, which is set to the first seat or the second seat, operable to hold the screen in a hinge like manner.

10. The video displaying system according to Claim 9, further comprising a movement unit operable to move the screen along a backrest of the first seat or the second seat.

11. The video displaying system according to Claim 10,
wherein the holding unit and the movement unit are structured in a way that movement along the backrest of the screen causes the swing.

12. The video displaying system according to Claim 11,
wherein the holding unit and the movement unit are structured as follows:
at the time when the screen moves upward along the backrest, in response to the movement, the screen swings in a way that an angle between the screen and the backrest increases; and
at the time when the screen moves downward along the backrest, in response to the movement, the screen swings in a way that an angle between the screen and the backrest decreases.

13. The video displaying system according to Claim 10, further comprising:
a screen status detecting unit operable to detect at least one of an angle between the screen and the backrest of the first seat or the second seat and a position of the screen, the angle changing according to the rotation of the screen and the position changing according to a movement of the screen; and
a video position movement control unit operable to change at least one of a reflection direction of the light by the reflection unit and a position of the reflection unit in a way that a position of the video that is shown on the screen is maintained according to the detection result obtained by the screen status detecting unit.

14. The video displaying system according to Claim 13, further comprising a reclining angle detecting unit operable to detect the reclining angle of the first seat or the second seat on which the screen is set,
wherein the video position movement control unit changes at least one of the reflection direction of the light by the reflection unit and the position of the reflection unit in a way that the position of the video that is shown on the screen is maintained according to the detection result of the screen status detecting unit and the reclining angle detecting unit.

15. The video displaying system according to Claim 14, further comprising:
a stopping unit operable to stop the projection of the light from the projection unit in the case where the stopping unit judges that the reclining angle detected by the reclining angle detecting unit is a predetermined threshold value or more.

16. The video displaying system according to Claim 14,
wherein the projection unit specifies the light path length of the light between the projection unit and the screen based on the detection result of the screen status detecting unit and the reclining angle detecting unit and adjusts the focus of the light to be projected according to the light path length.

17. The video displaying system according to Claim 16,
wherein the projection unit performs the correction processing on the light to be projected so as not to cause any distortions in the video that is shown on the screen based on the detection result of the screen status detecting unit and the reclining angle detecting unit.

18. The video displaying system according to Claim 17, further comprising:
a reflection relay unit operable to further reflect the light that is reflected by the reflection unit toward the screen according to a change of at least one of a reflection direction of the light projected by the reflection unit and a position of the reflection unit; and
a switching unit operable to change any of an orientation or a position of the reflection unit based on the detection result obtained by the screen status detecting unit and the reclining angle detection unit and switch the following light paths: a first light path from the reflection unit to the screen via the reflection relay unit; and a second light path from the reflection unit to the screen without passing via the reflection relay unit.

19. The video displaying system according to Claim 17,
wherein the switching unit compares the first correction amount necessary for the correction processing in the first light path with the second correction amount necessary for the correction processing in the second light path based on the detection result of the screen status detecting unit and the reclining angle detecting unit, and changes any of the direction or the position of the reflection unit so that the first light path is switched to the second light path at the time when the second correction amount is smaller than the first correction amount.

20. The video displaying system according to Claim 14,
wherein the switching unit calculates the correction amount necessary for the correction processing in the first light path based on the detection result of the screen status detecting unit and the reclining angle detecting unit and changes any of the direction or the position of the reflection unit so that the first light path is switched to the second light path at the time when the correction amount is bigger than the prescribed threshold value.

21. The video displaying system according to Claim 9,
wherein the holding unit holds the screen horizontally.

22. The video displaying system according to Claim 9,
wherein the holding unit holds the screen in a way that the screen is laid against the backrest of the first seat or the second seat on which the screen is set when the light is not projected from the projection unit.

23. The video displaying system according to Claim 9, further comprising a shielding unit operable to shield light path of the light in a way that the shielding unit covers the light path so as not to allow incoming light to affect the light.

24. The video displaying system according to Claim 9, further comprising an enclosure which includes the projection unit and the reflection unit.

25. The video displaying system according to Claim 9,
wherein the video displaying system is set in space of a car where the first seat is a front seat and the second seat is a back seat.

26. A video display method for displaying video in space where the first seat and the second seat are set, comprising:
a projection step where a projector that is placed around the lower part of the first seat projects the light for showing the video; and
a display step where a screen that is set to the first seat or the second seat receives the light that is projected in the projection step.

27. The video display method according to Claim 26,
wherein the video display method further comprises a reflection step where the reflector reflects the light that is projected in the projection step, and
in the display step, the light that is reflected in the reflection step is received so as to display the video.

28. The video display method according to Claim 27, further comprising a movement step operable to move the projector in a way that a light path length between the projector and the screen changes according to user's operation.

29. The video display method according to Claim 27, further comprising:
a movement step where a moving tool moves the screen along the first backrest or the second backrest; and
a rotation step where a rotating tool swings the screen.

30. The video display method according to Claim 29,
wherein, in the rotation step,
when the screen moves upward along the backrest in the moving step, in response to the movement, the screen is swung in a way that the angle between the screen and the backrest increases, and
when the screen moves downward along the backrest in the moving step, in response to the movement, the screen is swung in a way that the angle between the screen and the backrest decreases.

31. The video display method according to Claim 29, further comprising:
a screen status detection step of detecting at least one of an angle between the screen and the backrest of the first seat or the second seat and a position of the screen, the angle changing according to a rotation of the screen and the position changing according to a movement of the screen; and
a video position movement control step of changing at least one of a reflection direction of the light by the reflector and the position of the reflector according to the detection result in the screen status detecting step in a way that the position of the video that is shown on the screen is maintained.

32. The video display method according to Claim 31, further comprising a reclining angle detecting step where the screen detects the reclining angle of the first seat or the second seat on which the screen is installed,
wherein, in the video position movement control step, at least one of a reflection direction of the light by the reflector and a position of the reflector is changed according to the detection result in the screen status detecting step and the reclining angle detecting step in a way that the position of the video that is shown on the screen is maintained.

33. The video display method according to Claim 32, further comprising a focus adjusting step where the projector specifies a light path length of the light between the projector and the screen based on the detection result in the screen status detecting step and the reclining angle detecting step and adjusts the focus of the light to be projected according to the light path length.

34. The video display method according to Claim 32, further comprising a correction processing step where the projector performs a correction processing on the light to be projected so as not to cause any distortions in the video that is shown on the screen based on the detection result in the screen status detecting step and the reclining angle detecting step.
